# EUROPEAN PATENT SPECIFICATION

(11) **EP 3 819 869 B1**
(45) Date of publication and mention of the grant of the patent: **22.05.2024**
(21) Application number: 20177234.0
(22) Date of filing: 28.05.2020
(51) Int. Cl.: G06T 7/50, H04N 13/271

(54) **METHOD AND APPARATUS WITH DEPTH IMAGE GENERATION**
VERFAHREN UND VORRICHTUNG MIT TIEFENBILDERZEUGUNG
PROCÉDÉ ET APPAREIL AVEC GÉNÉRATION D'IMAGES DE PROFONDEUR

(30) Priority: 08.11.2019 KR 20190142886
(43) Date of publication of application: 12.05.2021
(73) Proprietor: Samsung Electronics Co., Ltd., Gyeonggi-do 16677 (KR)
(72) Inventor: Kim, Jihye, 16678 Gyeonggi-do (KR); Rhee, Seon Min, 16678 Gyeonggi-do (KR); Han, Jaejoon, 16678 Gyeonggi-do (KR); Kim, Heewon, 16678 Gyeonggi-do (KR)
(74) Representative: Arnold & Siedsma

(56) References cited:
- US-A1- 2015 097 927
- US-A1- 2019 197 667
- WEN YANG ET AL: "Deep Color Guided Coarse-to-Fine Convolutional Network Cascade for Depth Image Super-Resolution", IEEE TRANSACTIONS ON IMAGE PROCESSING, IEEE SERVICE CENTER, PISCATAWAY, NJ, US, vol. 28, no. 2, 1 February 2019 (2019-02-01), pages 994-1006, XP011701957, ISSN: 1057-7149, DOI: 10.1109/TIP.2018.2874285 [retrieved on 2018-10-23]
- DENG XIN ET AL: "RADAR: Robust Algorithm for Depth Image Super Resolution Based on FRI Theory and Multimodal Dictionary Learning", IEEE TRANSACTIONS ON CIRCUITS AND SYSTEMS FOR VIDEO TECHNOLOGY, INSTITUTE OF ELECTRICAL AND ELECTRONICS ENGINEERS, US, vol. 30, no. 8, 18 June 2019 (2019-06-18), pages 2447-2462, XP011803210, ISSN: 1051-8215, DOI: 10.1109/TCSVT.2019.2923901 [retrieved on 2020-08-03]
- LIU JIWEI ET AL: "Fully convolutional multi-scale dense networks for monocular depth estimation", IET COMPUTER VISION, THE INSTITUTION OF ENGINEERING AND TECHNOLOGY, MICHAEL FARADAY HOUSE, SIX HILLS WAY, STEVENAGE, HERTS. SG1 2AY, UK, vol. 13, no. 5, 1 August 2019 (2019-08-01) , pages 515-522, XP006079573, ISSN: 1751-9632, DOI: 10.1049/IET-CVI.2018.5645

## Description

### BACKGROUND

### 1. Field

The following description relates to an image processing technology of generating a depth image.

### 2. Description of Related Art

Use of three-dimensional (3D) information may be important for recognizing an image or understanding a scene. By adding depth information to two-dimensional (2D) spatial information, a spatial distribution of objects may be effectively predicted. Generally, depth information is obtained only when a depth image is acquired using a depth camera, and a quality of a depth image that may be acquired from the depth camera varies depending on a performance of the depth camera. For example, a noise level or a resolution of the acquired depth image may vary depending on the performance of the depth camera. Since an accuracy of depth information has a great influence on a quality of a result based on the depth information, it is important to acquire a depth image with a high quality. US 2015/097927 A1; Wen Yang et al: "Deep Color Guided Coarse-to-Fine Convolutional Network Cascade for Depth Image Super-Resolution", IEEE Transactions on Image Processing, vol. 28 no. 2, February 2019, pages 994-1006; Deng Xin et al: "RADAR: Robust Algorithm for Depth Image Super Resolution Based on FRI Theory and Multimodal Dictionary Learning, IEEE Transactions on Circuits and Systems for Video Technology, vol. 30, no. 8, June 2019, pages 2447-2462; Liu Jiwei et al: "Fully Convolutional Multi-Scale Dense Networks for Monocular Depth Estimation", IET Computer Vision, vol. 13 no. 5, August 2019, pages 515-522; and US 2019/197667 disclose some solutions to this problem.

### SUMMARY

A first aspect of the present invention is a method for depth generation according to claim 1, and a corresponding apparatus for depth generation according to claim 9. This method may further include features of claims 2-4, and the apparatus may further include features of claims 10-12.

A second aspect of the present invention is a method for depth generation according to claim 5, and a corresponding apparatus for depth generation according to claim 13. This method may further include features of claim 6, and the apparatus may further include features of claim 14.

A third aspect of the present invention is a method for depth generation according to claim 7, and a corresponding apparatus for depth generation according to claim 15.

A fourth aspect of the present invention is a non-transitory computer-readable storage medium according to claim 8.

### BRIEF DESCRIPTION OF THE DRAWINGS

FIG. 1 illustrates an example of an overview of a depth image generation apparatus.
FIG. 2 is a flowchart illustrating an example of a depth image generation method.
FIG. 3 is a flowchart illustrating an example of generating a first low-resolution depth image.
FIG. 4 illustrates an example of a process of generating a depth image.
FIG. 5 illustrates an example of a training process.
FIG. 6 illustrates an example of a process of generating a depth image.
FIG. 7 illustrates an example of a training process.
FIGS. 8 through 10 illustrate examples of generating a depth image.
FIG. 11 illustrates an example of a configuration of a depth image generation apparatus.
FIG. 12 illustrates an example of a configuration of a computing apparatus.

Throughout the drawings and the detailed description refer to the same elements, features, and structures. The drawings may not be to scale, and the relative size, proportions, and depiction of elements in the drawings may be exaggerated for clarity, illustration, and convenience.

### DETAILED DESCRIPTION

The following detailed description is provided to assist the reader in gaining a comprehensive understanding of the methods, apparatuses, and/or systems described herein. However, various changes, modifications, and equivalents of the methods, apparatuses, and/or systems described herein will be apparent after an understanding of the disclosure of this application. For example, the sequences of operations described herein are merely examples, and are not limited to those set forth herein, but may be changed as will be apparent after an understanding of the disclosure of this application, with the exception of operations necessarily occurring in a certain order. Also, descriptions of features that are known in the art may be omitted for increased clarity and conciseness.

The features described herein may be embodied in different forms, and are not to be construed as being limited to the examples described herein. Rather, the examples described herein have been provided merely to illustrate some of the many possible ways of implementing the methods, apparatuses, and/or systems described herein that will be apparent after an understanding of the disclosure of this application.

Herein, it is noted that use of the term "may" with respect to an example or embodiment, e.g., as to what an example or embodiment may include or implement, means that at least one example or embodiment exists in which such a feature is included or implemented while all examples and embodiments are not limited thereto.

Throughout the specification, when an element, such as a layer, region, or substrate, is described as being "on," "connected to," or "coupled to" another element, it may be directly "on," "connected to," or "coupled to" the other element, or there may be one or more other elements intervening therebetween. In contrast, when an element is described as being "directly on," "directly connected to," or "directly coupled to" another element, there can be no other elements intervening therebetween. As used herein, the term "and/or" includes any one and any combination of any two or more of the associated listed items.

Although terms such as "first," "second," and "third" may be used herein to describe various members, components, regions, layers, or sections, these members, components, regions, layers, or sections are not to be limited by these terms. Rather, these terms are only used to distinguish one member, component, region, layer, or section from another member, component, region, layer, or section. Thus, a first member, component, region, layer, or section referred to in examples described herein may also be referred to as a second member, component, region, layer, or section without departing from the teachings of the examples.

The terminology used herein is for describing various examples only and is not to be used to limit the disclosure. The articles "a," "an," and "the" are intended to include the plural forms as well, unless the context clearly indicates otherwise. The terms "comprises," "includes," and "has" specify the presence of stated features, numbers, operations, members, elements, and/or combinations thereof, but do not preclude the presence or addition of one or more other features, numbers, operations, members, elements, and/or combinations thereof.

The features of the examples described herein may be combined in various ways as will be apparent after an understanding of the disclosure of this application. Further, although the examples described herein have a variety of configurations, other configurations are possible as will be apparent after an understanding of the disclosure of this application.

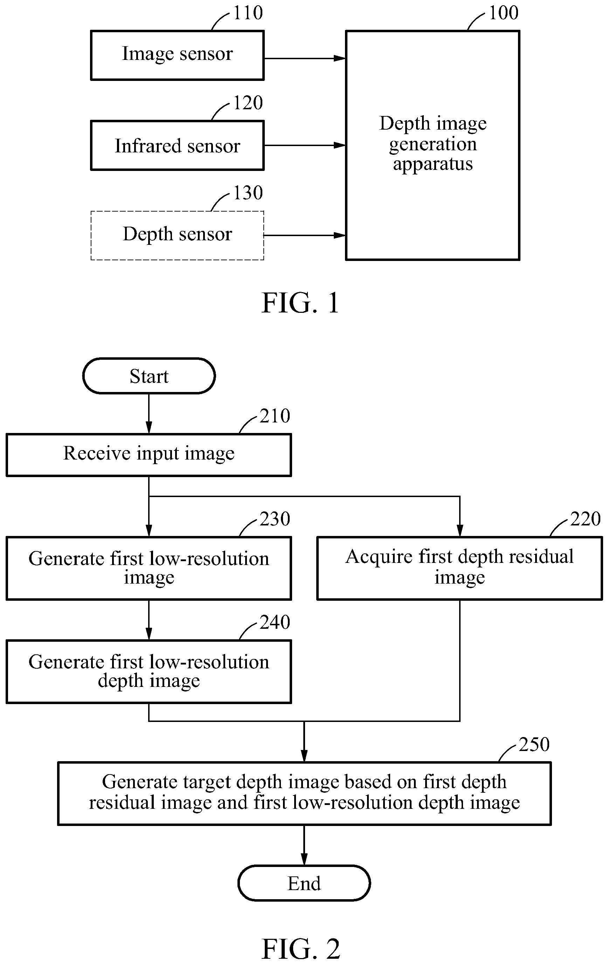

FIG. 1 illustrates an example of an overview of a depth image generation apparatus 100.

Referring to FIG. 1, the depth image generation apparatus 100 is an apparatus for generating a depth image based on an input image. According to an example, the depth image generation apparatus 100 may generate a depth image based on a color image or an infrared image instead of using a separate depth image, or may generate a depth image with a relatively high resolution or high quality from a depth image with a relatively low resolution or low quality.

In an example, the depth image generation apparatus 100 may generate a depth image based on a color image sensed by an image sensor 110 or an infrared image sensed by an infrared sensor 120. In another example, the depth image generation apparatus 100 may generate a depth image having a resolution higher than a resolution of a depth image sensed by a depth sensor 130, based on a color image sensed by the image sensor 110 and the depth image sensed by the depth sensor 130. In another example, the depth image generation apparatus 100 may generate a depth image having a resolution higher than a resolution of a depth image sensed by the depth sensor 130, based on an infrared image sensed by the infrared sensor 120 and the depth image sensed by the depth sensor 130. In the foregoing examples, the color image, the infrared image and the depth image may be images that represent the same scene and that correspond to each other.

The image sensor 110 is, for example, a sensor configured to acquire a color image representing color information of an object, and includes, for example, a complementary metal-oxide-semiconductor (CMOS) image sensor, a charge-coupled device (CCD) image sensor, or a stereo camera. The infrared sensor 120 is a sensor configured to sense an infrared ray emitted from an object or infrared reflection light reflected by the object and to generate an infrared image. The depth sensor 130 is a device configured to acquire a depth image representing depth information of an object, and may include, for example, a kinect, a time-of-flight (TOF) depth camera, or a three-dimensional (3D) scanner. In an example in which the image sensor 110 is a stereo camera, a stereo image including a left image and a right image may be acquired from the stereo camera, and a depth image may be derived from the stereo image using a known stereo matching scheme.

The depth image is an image representing depth information, which is information about a depth or a distance from a capturing position to an object. The depth image may be used for an object recognition such as a 3D face recognition, or used to process a photographic effect such as an out-of-focusing effect. For example, a depth image may be used to understand a scene including an object. The depth image may determine a geometric relationship between objects or provide 3D geometric information, to help to enhance a performance of a visual object recognition.

When a physical sensor, for example, the depth sensor 130, is used to acquire a depth image, costs may increase, a depth measurement distance may be limited, a measurement error may occur, and vulnerability to external light may be caused. The depth image generation apparatus 100 may generate a depth image from a color image or an infrared image using a deep learning-based generation model, such that the depth image is acquired even though the depth sensor 130 is not used, to address the above-described limitations. For example, based on the depth image generated by the depth image generation apparatus 100, a distribution in a 3D space may be predicted using a single color image or a single infrared image, an accuracy of an object recognition may be increased, and a scene may be understood robustly in a circumstance in which an occlusion is present.

To increase a utility of a depth image, it is important to use a depth image with a high resolution or a high quality. To obtain a desirable result based on a depth image, it is important to acquire a depth image that accurately represents a depth feature, for example, a depth feature of an edge of an object. The depth image generation apparatus 100 may generate a depth image with a high resolution and a high quality using a multi-scale-based depth image generation method that will be described below. That is, the depth image generation apparatus 100 may more precisely and accurately estimate depth information using a multi-scale-based depth image generation method of distinguishing global information from local information in a depth image and of estimating the global information and the local information.

Also, the depth image generation apparatus 100 may generate a depth image with a high quality by processing a depth image acquired by, for example, the depth sensor 130. An operation by which the depth image generation apparatus 100 generates a depth image with a higher quality by processing a depth image provided as an input may correspond to a calibration of a depth image. For example, the depth image generation apparatus 100 generates a depth image for depth information that is finer than depth information of a depth image provided as an input, based on information included in a color image or an infrared image. In this example, the depth image generation apparatus 100 may generate a depth image with a high quality using the multi-scale-based depth image generation method.

Hereinafter, a method of generating a depth image by the depth image generation apparatus 100 will be further described with reference to the drawings.

FIG. 2 is a flowchart illustrating an example of a depth image generation method.

Referring to FIG. 2, in operation 210, a depth image generation apparatus receives an input image. The input image may include, for example, a color image including RGB color information and/or an infrared image, and may be a single image. The depth image generation apparatus receives an input image from an image acquisition apparatus, and the image acquisition apparatus may include an image sensor and/or an infrared sensor.

In operation 220, the depth image generation apparatus acquires a first depth residual image corresponding to the input image using a first generation model that is based on a first neural network. A pixel value of the input image is input to the first generation model, and the first depth residual image corresponding to a scale of the input image is output from the first generation model. The first generation model is a model trained to output a depth residual image based on input information through a training process. The first depth residual image includes, for example, depth information of a high-frequency component, and is an image that may relatively accurately represent an edge component of an object. In the disclosure herein, the terms "scale" and "resolution" may be interchangeably used with respect to each other.

In operation 230, the depth image generation apparatus generates a first low-resolution image having a resolution lower than a resolution of the input image. In an example, the depth image generation apparatus may downsample the input image to generate the first low-resolution image. For example, the depth image generation apparatus may generate a first low-resolution image corresponding to a scale that is half of the scale of the input image. In an example in which the input image is a color image, the first low-resolution image may be a color image with a reduced resolution. In an example in which the input image is an infrared image, the first low-resolution image may be an infrared image with a reduced resolution.

In operation 240, the depth image generation apparatus generates a first low-resolution depth image corresponding to the first low-resolution image using a second generation model that is based on a second neural network. The first low-resolution depth image includes, for example, depth information of a low-frequency component, in comparison to the first depth residual image generated in operation 220. The second generation model is also a model trained through the training process.

In an example, the depth image generation apparatus estimates depth information of a high-frequency component and depth information of a low-frequency component, and combines the estimated depth information of the high-frequency component and the estimated depth information of the low-frequency component to generate a depth image. In this example, a pixel value of the first low-resolution image is input to the second generation model, and a first low-resolution depth image corresponding to a scale or a resolution of the first low resolution image is output from the second generation model. The second generation model is a model trained to output the first low-resolution depth image based on input information. The first depth residual image includes depth information of a high-frequency component, and the first low-resolution depth image includes depth information of a low-frequency component.

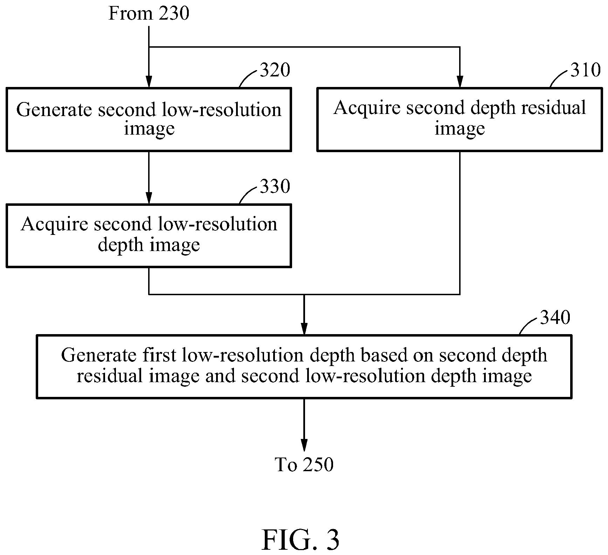

In another example, the depth image generation apparatus estimates depth information of a high-frequency component, depth information of an intermediate-frequency component and depth information of a low-frequency component, and combines the estimated depth information of the high-frequency component, the estimated depth information of the intermediate-frequency component and the estimated depth information of the low-frequency component, to generate a depth image. In this example, a third generation model that is based on a third neural network may be used together with the second generation model. This example will be further described with reference to FIG. 3.

Referring to FIG. 3, in operation 310, the depth image generation apparatus acquires a second depth residual image corresponding to the first low-resolution image using the second generation model. The pixel value of the first low-resolution image is input to the second generation model, and the second depth residual image corresponding to the first low-resolution image is output from the second generation model. The second depth residual image may include depth information of an intermediate-frequency component. The second generation model is a model trained to output the second depth residual image based on input information.

In operation 320, the depth image generation apparatus generates a second low-resolution image having a resolution lower than the resolution of the first low-resolution image. For example, the depth image generation apparatus may downsample the first low-resolution image to generate the second low-resolution image. For example, the depth image generation apparatus may generate the second low-resolution image corresponding to a scale that is half of a scale of the first low-resolution image.

In operation 330, the depth image generation apparatus acquires a second low-resolution depth image corresponding to the second low-resolution image using the third generation model. The second low-resolution depth image has a resolution lower than the resolution of the first low-resolution depth image, and includes, for example, depth information of a low-frequency component. The third generation model is a model trained to output the second low-resolution depth image based on input information.

In operation 340, the depth image generation apparatus generates the first low-resolution depth image based on the second depth residual image and the second low-resolution depth image. The second depth residual image may include depth information of a high-frequency component, in comparison to the second low-resolution depth image. In an example, the depth image generation apparatus upsamples the second low-resolution depth image to a resolution of the second depth residual image, and combines depth information of the upsampled second low-resolution depth image and depth information of the second depth residual image to generate the first low-resolution depth image.

Referring back to FIG. 2, in operation 250, the depth image generation apparatus generates a target depth image corresponding to the input image based on the first depth residual image and the first low-resolution depth image. In an example, the depth image generation apparatus upsamples the first low-resolution depth image to the resolution of the input image and combines depth information of the upsampled first low-resolution depth image and depth information of the first depth residual image, to generate the target depth image.

As described above, the depth image generation apparatus may generate a depth image based on a structure in which depth information is increasingly refined by being subdivided by scale. The depth image generation apparatus may configure input images with various scales, may input an input image with each scale to each generation model, and may acquire images including depth information with different frequency components from each generation model. The depth image generation apparatus may generate a final target depth image by combining the acquired images including depth information with different frequency components. Thus, the depth image generation apparatus may derive a depth image with a high quality from a color image or an infrared image, instead of using a separate depth sensor or an initial depth image.

In an example, the depth image generation apparatus may generate a depth image with a higher quality by calibrating an input depth image provided as an input. In this example, the depth image generation method of FIG. 2 may be changed. In operation 210, an input depth image together with one of a color image or an infrared image may be provided as input images to the depth image generation apparatus. The input depth image may be a depth image acquired by a depth sensor, or a depth image generated through image processing, for example, a stereo matching scheme.

In an example in which the input image includes a color image and an input depth image, the depth image generation apparatus may acquire the first depth residual image using the first generation model that uses a pixel value of the color image and a pixel value of the input depth image as inputs, and that outputs a pixel value of the first depth residual image in operation 220. In operation 230, the depth image generation apparatus may generate a first low-resolution input depth image having a resolution lower than a resolution of the input depth image, together with the first low-resolution image having a resolution lower than a resolution of the color image. In operation 240, the depth image generation apparatus may acquire the first low-resolution depth image using the second generation model that uses a pixel value of the first low-resolution image and a pixel value of the first low-resolution input depth image as inputs, and that outputs a pixel value of the first low-resolution depth image.

In another example, the depth image generation apparatus may also acquire the first low-resolution depth image using a process similar to the example of FIG. 3. For example, the depth image generation apparatus may acquire the second depth residual image using the second generation model that uses a pixel value of the first low-resolution image and a pixel value of the first low-resolution input depth image as inputs, and that outputs a pixel value of the second depth residual image in operation 310. In operation 320, the depth image generation apparatus may generate a second low-resolution input depth image having a resolution lower than the resolution of the first low-resolution input depth image, together with the second low-resolution image having a resolution lower than the resolution of the first low-resolution image. In operation 330, the depth image generation apparatus may acquire the second low-resolution depth image using the third generation model that uses a pixel value of the second low-resolution image and a pixel value of the second low-resolution input depth image as inputs and that outputs a pixel value of the second low-resolution depth image. In operation 340, the depth image generation apparatus may generate the first low-resolution depth image by combining the second depth residual image and the second low-resolution depth image.

Similarly to the above description, in operation 250, the depth image generation apparatus generates the target depth image corresponding to the input image based on the first depth residual image and the first low-resolution depth image. Unlike the above example, when the input image includes an infrared image and an input depth image, the depth image generation apparatus may generate the target depth image based on a process of replacing the color image by the infrared image in the above-described process. The depth image generation apparatus may generate a depth image with a higher quality based on a multi-scale depth image generation structure as described above, even though depth information is not fine or even though a depth image with a low quality, (e.g., a large amount of noise) is provided as an input depth image.

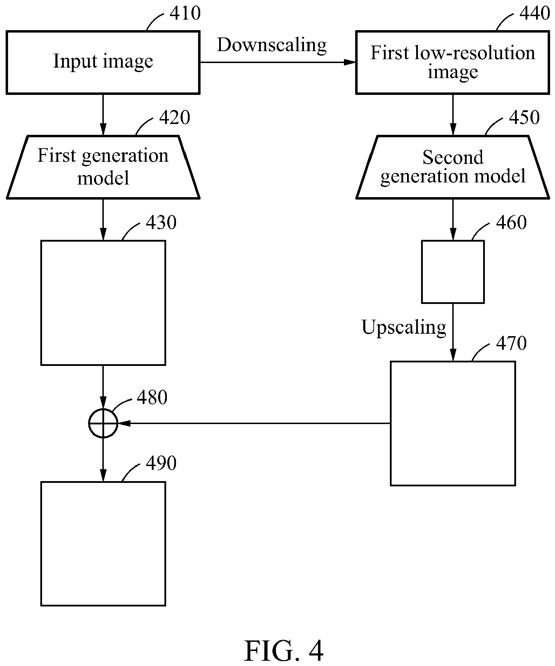

FIG. 4 illustrates an example of a process of generating a depth image.

As described above, a depth image generation apparatus may generate a depth image based on an input image through a multi-scale-based depth estimation structure. Even when depth information is not provided as an input, the depth image generation apparatus may estimate depth information from a color image or an infrared image using the multi-scale-based depth estimation structure. The multi-scale-based depth estimation structure is a structure of decomposing an input image into frequency components and estimating and processing depth information corresponding to each of the frequency components. For example, the multi-scale-based depth estimation structure of FIG. 4 is a structure of decomposing an input image 410 into a high-frequency component and a low-frequency component, estimating depth information corresponding to each frequency component, combining the estimated depth information, and generating a depth image. Using the multi-scale-based depth estimation structure, depth information is sequentially refined for each scale, and a final target depth image is generated.

Referring to FIG. 4, the depth image generation apparatus receives the input image 410. The input image 410 may include, for example, a color image or an infrared image, and may be a single image. In an example, an image obtained by concatenating a color image and an infrared image may be provided as the input image 410. Although an example in which the input image 410 is a color image is described below, the following process is equally applicable to an example in which the input image 410 is another image.

The depth image generation apparatus acquires a first depth residual image 430 corresponding to the input image 410 using a first generation model 420 that is based on a first neural network. A pixel value of the input image 410 is input to the first generation model 420, and the first generation model 420 outputs a pixel value of the first depth residual image 430. The first depth residual image 430 has a resolution or scale corresponding to a resolution or a scale of the input image 410, and includes depth information of a high-frequency component including an edge detail component of an object.

The depth image generation apparatus generates a first low-resolution image 440 by downscaling the input image 410. For example, the depth image generation apparatus may downsample the input image 410, may perform a blurring process, for example, Gaussian smoothing, and may generate the first low-resolution image 440. The first low-resolution image 440 includes color information of a low-frequency component in comparison to the input image 410.

The depth image generation apparatus generates a first low-resolution depth image 460 corresponding to the first low-resolution image 440 using a second generation model 450 that is based on a second neural network. A pixel value of the first low-resolution image 440 is input to the second generation model 450, and the second generation model 450 outputs a pixel value of the first low-resolution depth image 460. The first low-resolution depth image 460 has a resolution or scale corresponding to a resolution or a scale of the first low-resolution image 440, and includes depth information of a low-frequency component in comparison to the first depth residual image 430.

The first generation model 420 and the second generation model 450 are models trained to output the first depth residual image 430 and the first low-resolution depth image 460, respectively, based on input information. An image-to-image translation scheme, for example, Pix2Pix, GycleGAN, and DiscoGAN, using generative adversarial networks (GANs) may be used to implement the first generation model 420 and the second generation model 450.

The depth image generation apparatus upscales the first low-resolution depth image 460 and generates an upscaled first low-resolution depth image 470. For example, the depth image generation apparatus upsamples the first low-resolution depth image 460 to generate the first low-resolution depth image 470 having a scale corresponding to a scale of the first depth residual image 430. The depth image generation apparatus combines the first depth residual image 430 and the upscaled first low-resolution depth image 470 in operation 480 to generate a target depth image 490 corresponding to the input image 410. Operation 480 corresponds to, for example, a weighted sum or summation of depth values of pixel positions corresponding to each other in the first depth residual image 430 and the upscaled first low-resolution depth image 470. In an example, the first depth residual image 430 includes depth information of a residual component obtained by removing depth information of the upscaled first low-resolution depth image 470 from the target depth image 490.

As described above, in the generation of depth information by combining global information and local information for the depth information, the depth image generation apparatus may guide depth information of different frequency components to be estimated in each of a plurality of steps in a multi-scale structure, to generate a depth image with a higher resolution. The depth image generation apparatus may guide a residual component corresponding to depth information that is not estimated in each of the steps, to be processed in another step, and accordingly depth information of a frequency component may be separated and independently estimated in each of the steps. The depth image generation apparatus may generate a sophisticated depth image from a color image or an infrared image even though a separate depth sensor is not used, and may also generate a plurality of depth images from a single input image.

In an example, the depth image generation apparatus generates a depth image with a quality higher than a quality of an input depth image by calibrating depth information of the input depth image using the multi-scale-based depth estimation structure of FIG. 4. In this example, the input depth image as well as the color image or the infrared image may be provided as the input image 410. The depth image generation apparatus acquires the first depth residual image 430 using the first generation model 420 that uses a pixel value of the color image and a pixel value of the input depth image as inputs, and that outputs a pixel value of the first depth residual image 430. The depth image generation apparatus generates a first low-resolution input depth image having a resolution lower than a resolution of the input depth image, together with the first low-resolution image 440 having a resolution lower than a resolution of the color image. The depth image generation apparatus acquires the first low-resolution depth image 460 using the second generation model 450 that uses a pixel value of the first low-resolution image 440 and a pixel value of the first low-resolution input depth image as inputs and that outputs a pixel value of the first low-resolution depth image 460. Subsequent operations may be the same as those described above, and the target depth image 490 generated based on the above process may include more fine and accurate depth information than the depth information of the input depth image provided as an input.

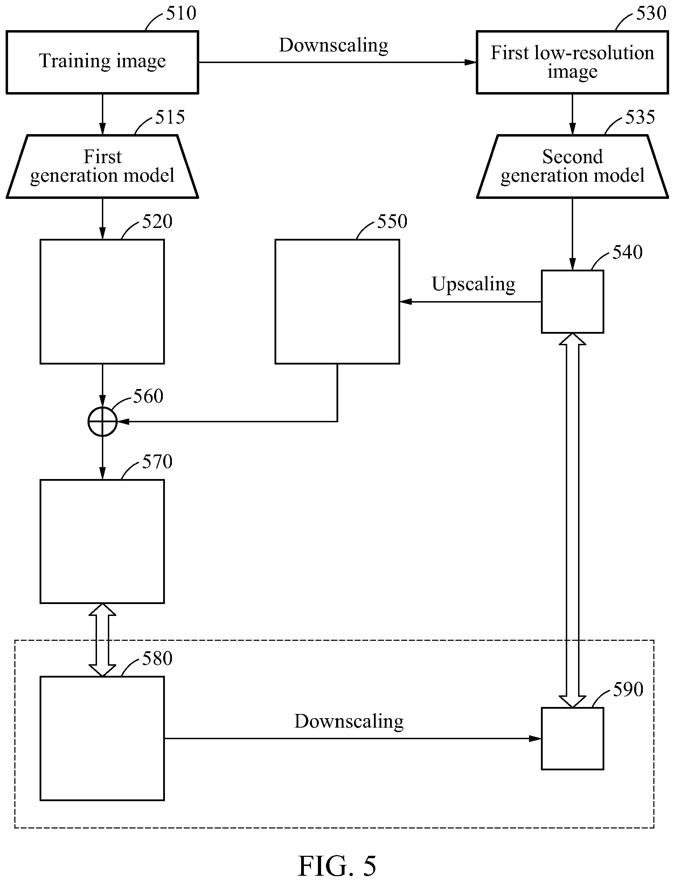

FIG. 5 illustrates an example of a training process.

Referring to FIG. 5, a training apparatus for performing the training process trains a first generation model 515 and a second generation model 535. The training apparatus downscales a depth image 580 as a target image to generate a depth image 590 having a reduced scale. The depth image 580 may include depth information of a high-frequency component, and the depth image 590 may include depth information of a low-frequency component. Each of the depth images 580 and 590 is used as a reference image to calculate an error value of an output of each of the first generation model 515 and the second generation model 535.

When a training image 510 is provided, the training apparatus generates a first depth residual image 520 corresponding to the training image 510 using the first generation model 515, which is based on a first neural network. The training image 510 may include, for example, a color image, an infrared image, or an image obtained by concatenating the color image and the infrared image. The first depth residual image 520 may include depth information of a high-frequency component.

The training apparatus downscales the training image 510 to generate a first low-resolution image 530. The training apparatus generates a first low-resolution depth image 540 corresponding to the first low-resolution image 530 using the second generation model 535, which is based on a second neural network. The first low-resolution depth image 540 includes depth information of a low-frequency component.

The training apparatus upscales the first low-resolution depth image 540 to generate an upscaled first low-resolution depth image 550 having a same scale as a scale of the first depth residual image 520, and combines the upscaled first low-resolution depth image 550 and the first depth residual image 520 in operation 560 to generate a resulting depth image 570.

The above process by which the training apparatus generates the resulting depth image 570 corresponds to a process of generating the target depth image 490 based on the input image 410 in the example of FIG. 4.

The training apparatus calculates a difference between the resulting depth image 570 and a depth image 580 corresponding to a ground truth of depth information of a high-frequency component by comparing the resulting depth image 570 to the depth image 580. The training apparatus adjusts values of parameters, for example, parameters of the first neural network of the first generation model 515 to reduce the difference between the resulting depth image 570 and the depth image 580. For example, the training apparatus may find an optimal parameter value to minimize a value of a loss function that defines the difference between the resulting depth image 570 and the depth image 580. In this example, the loss function may be defined in various forms based on a classification scheme or a regression scheme. A scheme of adjusting a parameter value or a process of calibrating depth information for generation of the depth image 580 may be changed based on how the loss function is defined. Also, the training apparatus calculates a difference between the first low-resolution depth image 540 and a depth image 590 corresponding to a ground truth of depth information of a low-frequency component by comparing the first low-resolution depth image 540 to the depth image 590. The training apparatus adjusts parameters of the second generation model 535 to reduce the difference between the first low-resolution depth image 540 and the depth image 590. The training apparatus may find optimal values of parameters of each of the first generation model 515 and the second generation model 535 by repeatedly performing the above process on a large number of training images.

As a result, through the training process, the first generation model 515 is trained to output a first depth residual image including a residual component obtained by subtracting a depth image generated by upscaling the depth image 590 by a scale of the depth image 580 from the depth image 580, and the second generation model 535 is trained to output the depth image 590 that is downscaled.

The training apparatus may find optimal values of parameters of each of the first generation model 515 and the second generation model 535 by repeatedly performing the above process on a large number of training images. The training apparatus separately trains the first generation model 515 and the second generation model 535 that estimate depth information of each frequency component of a depth image, such that the depth information is effectively estimated. In the multi-scale-based depth estimation structure, the training apparatus uses a depth estimation result of a previous operation as a guide for a next training.

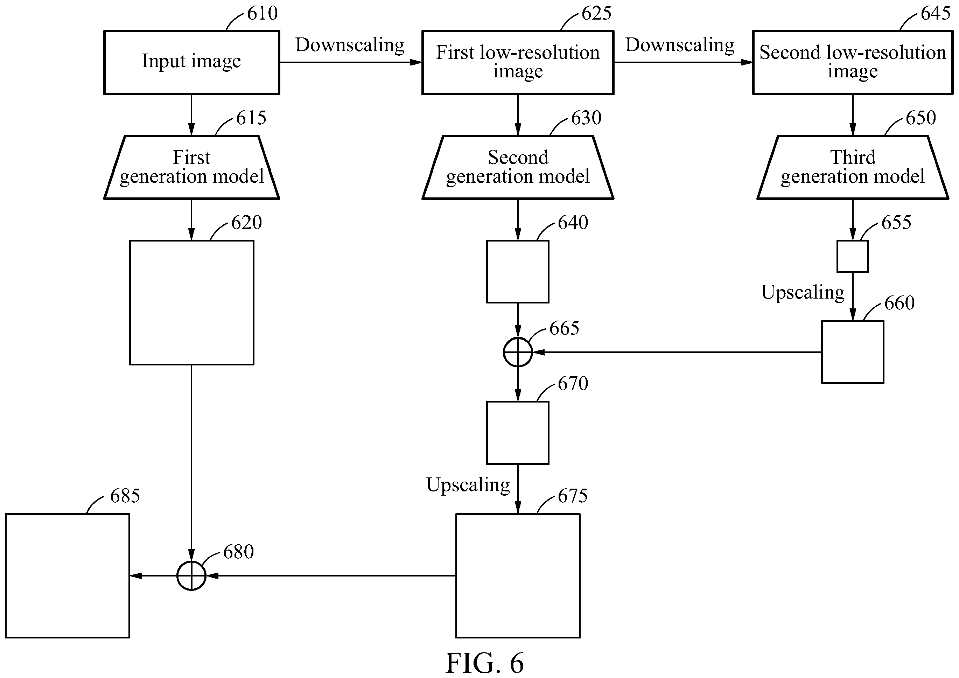

FIG. 6 illustrates another example of a process of generating a depth image.

In FIG. 6, a depth image generation apparatus generates a depth image using a three-layer depth estimation structure. The depth image generation apparatus individually estimates depth information of a high-frequency component, an intermediate-frequency component and a low-frequency component using a depth estimation structure, and combines the estimated depth information, to generate a final target depth image.

Referring to FIG. 6, the depth image generation apparatus receives an input image 610. The input image 610 may include, for example, a color image, an infrared image, or an image obtained by concatenating the color image and the infrared image. Although an example in which the input image 610 is a color image is described below, the following process is equally applicable to an example in which the input image 610 is another image.

The depth image generation apparatus acquires a first depth residual image 620 corresponding to the input image 610 using a first generation model 615 that is based on a first neural network. A pixel value of the input image 610 is input to the first generation model 615, and the first generation model 615 outputs a pixel value of the first depth residual image 620. The first depth residual image 620 may have a resolution corresponding to a resolution or a scale of the input image 610, and may include depth information of a high-frequency component.

The depth image generation apparatus downscales the input image 610 to generate a first low-resolution image 625. For example, the depth image generation apparatus may downsample the input image 610, may perform Gaussian smoothing and may generate the first low-resolution image 625. The first low-resolution image 625 may include color information of a low-frequency component in comparison to the input image 610.

The depth image generation apparatus acquires a second depth residual image 640 corresponding to the first low-resolution image 625 using a second generation model 630 that is based on a second neural network. A pixel value of the first low-resolution image 625 is input to the second generation model 630, and the second generation model 630 outputs a pixel value of the second depth residual image 640. The second depth residual image 640 may include depth information of an intermediate-frequency component, and may include depth information of a low-frequency component in comparison to the first depth residual image 620.

The depth image generation apparatus downscales the first low-resolution image 625 to generate a second low-resolution image 645. For example, the depth image generation apparatus may downsample the first low-resolution image 625, may perform Gaussian smoothing and may generate the second low-resolution image 645. The second low-resolution image 645 may include color information of a low-frequency component in comparison to the first low-resolution image 625.

The depth image generation apparatus acquires a second low-resolution depth image 655 corresponding to the second low-resolution image 645 using a third generation model 650 that is based on a third neural network. A pixel value of the second low-resolution image 645 is input to the third generation model 650, and the third generation model 650 outputs a pixel value of the second low-resolution depth image 655. The second low-resolution depth image 655 may include depth information of a low-frequency component.

The first generation model 615, the second generation model 630 and the third generation model 650 are models trained to output the first depth residual image 620, the second depth residual image 640 and the second low-resolution depth image 655 based on input information, respectively. An image-to-image translation scheme, for example, Pix2Pix, GycleGAN, and DiscoGAN, using GANs, may be used to implement the first generation model 615, the second generation model 630 and the third generation model 650.

The depth image generation apparatus upscales the second low-resolution depth image 655 to generate an upscaled second low-resolution depth image 660. For example, the depth image generation apparatus may upsample the second low-resolution depth image 655 to generate the second low-resolution depth image 660 having a scale corresponding to a scale of the second depth residual image 640. The depth image generation apparatus combines the second depth residual image 640 and the upscaled second low-resolution depth image 660 in operation 665, to generate a first low-resolution depth image 670. Operation 665 may correspond to, for example, a weighted sum or summation of depth values of pixel positions corresponding to each other in the second depth residual image 640 and the upscaled second low-resolution depth image 660. In an example, the second depth residual image 640 includes depth information of a residual component obtained by removing depth information of the upscaled second low-resolution depth image 660 from the first low-resolution depth image 670.

The depth image generation apparatus upscales the first low-resolution depth image 670 to generate an upscaled first low-resolution depth image 675. For example, the depth image generation apparatus may upsample the first low-resolution depth image 670 and generate the first low-resolution depth image 675 having a scale corresponding to a scale of the first depth residual image 620. The depth image generation apparatus combines the first depth residual image 620 and the upscaled first low-resolution depth image 675 in operation 680 to generate a target depth image 685 corresponding to the input image 610. Operation 680 corresponds to, for example, a weighted sum or summation of depth values of pixel positions corresponding to each other in the first depth residual image 620 and the upscaled first low-resolution depth image 675. In an example, the first depth residual image 620 includes depth information of a residual component obtained by removing depth information of the upscaled first low-resolution depth image 675 from the target depth image 685.

As described above, the depth image generation apparatus combines global information and local information for depth information through multiple steps of the multi-scale-based depth estimation structure. The depth image generation apparatus extracts global depth information from a color image with a smallest scale, extracts local depth information from color images with the other scales, and adds the extracted local depth information to the extracted global depth information, to gradually refine depth information.

The multi-scale-based depth estimation structure used to generate a depth image may have four or more layers, as well as two layers as described in the example of FIG. 4 and three layers as described in the example of FIG. 6.

In an example, the depth image generation apparatus generates a depth image with a quality higher than a quality of an input depth image by calibrating the input depth image using the multi-scale-based depth estimation structure of FIG. 6. In this example, the input image 610 may include, for example, an input depth image as well as a color image or an infrared image. The depth image generation apparatus acquires the first depth residual image 620 using the first generation model 615 that uses a pixel value of the color image and a pixel value of the input depth image as inputs, and that outputs a pixel value of the first depth residual image 620. The depth image generation apparatus generates a first low-resolution input depth image having a resolution lower than a resolution of the input depth image, together with the first low-resolution image 625 having a resolution lower than that of the color image. The depth image generation apparatus acquires the second depth residual image 640 using the second generation model 630 that uses a pixel value of the first low-resolution image 625 and a pixel value of the first low-resolution input depth image as inputs, and that outputs a pixel value of the second depth residual image 640. The depth image generation apparatus downscales the first low-resolution image 625 and the first low-resolution input depth image to generate the second low-resolution image 645 and a second low-resolution input depth image, respectively. The depth image generation apparatus acquires the second low-resolution depth image 655 using the third generation model 650 that uses a pixel value of the second low-resolution image 645 and a pixel value of the second low-resolution input depth image as inputs, and outputs a pixel value of the second low-resolution depth image 655. Subsequent operations may be the same as those described above, and the target depth image 685 generated based on the above process may include more fine and accurate depth information than the depth information of the input depth image provided as an input.

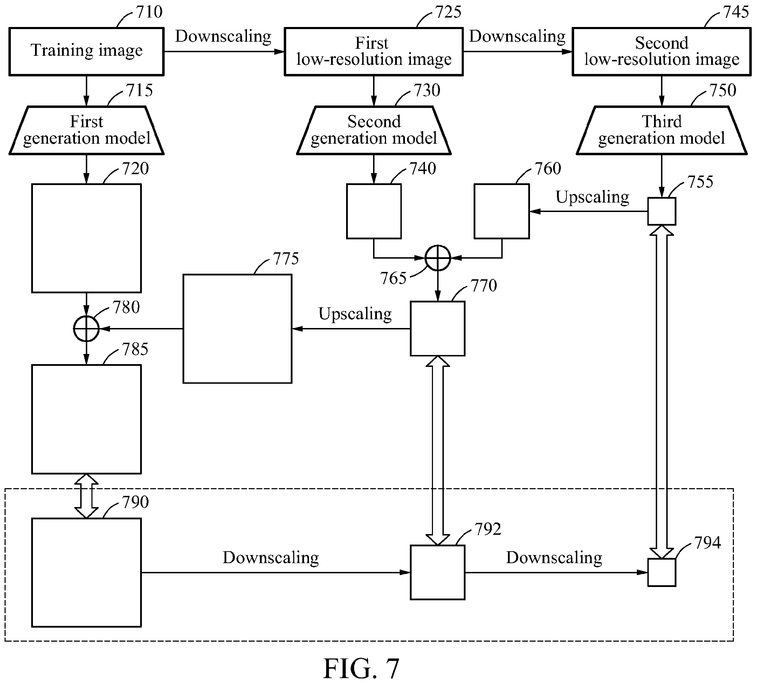

FIG. 7 illustrates another example of a training process.

Referring to FIG. 7, a training apparatus trains a first generation model 715, a second generation model 730 and a third generation model 750 through a training process. The training apparatus decomposes a depth image 790 that is a target image into three different frequency components, and trains the first generation model 715, the second generation model 730 and the third generation model 750 such that depth information of each frequency component is effectively estimated based on depth images 790, 792 and 794 corresponding to each frequency component, respectively.

The training apparatus downscales the depth image 790 to generate the depth image 792 having a reduced scale, and downscales the depth image 792 to generate the depth image 794 having a further reduced scale. The depth image 790 may include depth information of a high-frequency component, the depth image 792 may include depth information of an intermediate-frequency component, and the depth image 794 may include depth information of a low-frequency component. Each of the depth images 790, 792 and 794 is used as a reference image to calculate an error value of an output of each of the first generation model 715, the second generation model 730 and the third generation model 750.

When a training image 710 is provided, the training apparatus generates a first depth residual image 720 corresponding to the training image 710 using the first generation model 715 that is based on a first neural network. The training image 710 may include, for example, a color image, an infrared image, or an image obtained by concatenating the color image and the infrared image. The first depth residual image 720 may include depth information of a high-frequency component.

The training apparatus downscales the training image 710 to generate a first low-resolution image 725. The training apparatus generates a second depth residual image 740 corresponding to the first low-resolution image 725 using the second generation model 730 that is based on a second neural network. The second depth residual image 740 may include depth information of an intermediate-frequency component.

The training apparatus downscales the first low-resolution image 725 to generate a second low-resolution image 745. The training apparatus generates a second low-resolution depth image 755 corresponding to the second low-resolution image 745 using the third generation model 750 that is based on a third neural network. The second low-resolution depth image 755 may include depth information of a low-frequency component.

The training apparatus upscales the second low-resolution depth image 755 by a scale of the second depth residual image 740 to generate an upscaled second low-resolution depth image 760. The training apparatus combines the second depth residual image 740 and the upscaled second low-resolution depth image 760 in operation 765 to generate a first low-resolution depth image 770. The training apparatus upscales the first low-resolution depth image 770 to generate an upscaled first low-resolution depth image 775 having the same scale as a scale of the first depth residual image 720, and combines the upscaled first low-resolution depth image 775 and the first depth residual image 720 in operation 780, to generate a resulting depth image 785.

The above process by which the training apparatus generates the resulting depth image 785 corresponds to a process of generating a target depth image based on the training image 510 in the example of FIG. 5.

The training apparatus calculates a difference between the resulting depth image 785 and the depth image 790 corresponding to a ground truth of depth information of a high-frequency component, and adjusts values of parameters of the first generation model 715 to reduce the difference between the resulting depth image 785 and the depth image 790. The training apparatus calculates a difference between the first low-resolution depth image 770 and the depth image 792 corresponding to a ground truth of depth information of an intermediate-frequency component, and adjusts values of parameters of the second generation model 730 to reduce the difference between the first low-resolution depth image 770 and the depth image 792. Also, the training apparatus calculates a difference between the second low-resolution depth image 755 and the depth image 794 corresponding to a ground truth of depth information of a low-frequency component, and adjusts values of parameters of the third generation model 750 to reduce the difference between the second low-resolution depth image 755 and the depth image 794. The training apparatus may find optimal values of parameters of each of the first generation model 715, the second generation model 730 and the third generation model 750 by repeatedly performing the above process on a large number of training images.

As a result, through the training process, the first generation model 715 is trained to output a first depth residual image including a residual component obtained by subtracting a depth image generated by upscaling the depth image 792 by a scale of the depth image 790 from the depth image 790. The second generation model 730 is trained to output a second depth residual image including a residual component obtained by subtracting a depth image generated by upscaling the depth image 794 by a scale of the depth image 792 from the depth image 792. Also, the third generation model 750 is trained to output the depth image 794 that is downscaled.

As described above, the training apparatus decomposes the depth image 790 into frequency components, and trains the first generation model 715, the second generation model 730 and the third generation model 750 to estimate depth information of each frequency component. In operations other than an operation of using the third generation model 750, the training apparatus allows learning of only a depth residual component of a previous operation to separate characteristics of depth information estimated in each operation and to allow learning of the characteristics. Depth information estimated in a previous operation is used to generate an image for training in a next operation and used to guide the next operation. The training apparatus guides a residual component that is not estimated in each operation to be processed in a next operation, such that each of the first generation model 715, the second generation model 730 and the third generation model 750 efficiently estimates depth information of a frequency component corresponding to each of the first generation model 715, the second generation model 730 and the third generation model 750.

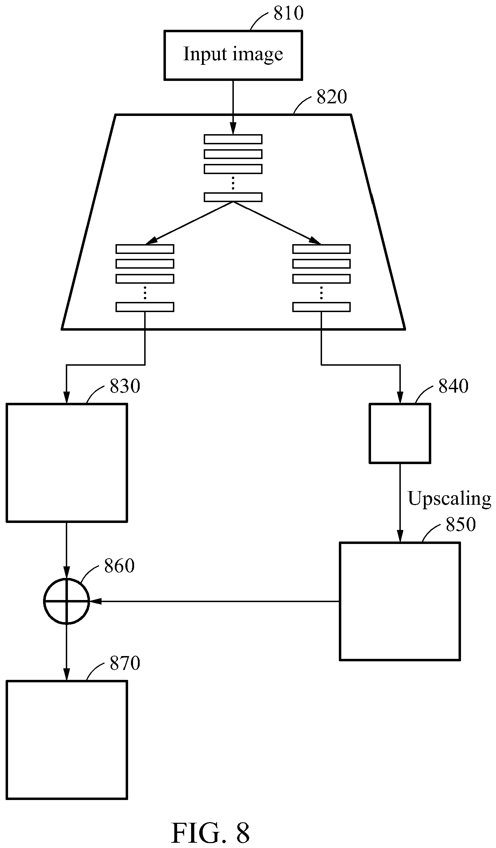

FIGS. 8 through 10 illustrate examples of generating a depth image.

Referring to FIG. 8, a depth image generation apparatus receives an input image 810, and acquires a first depth residual image 830 and a first low-resolution depth image 840 using a generation model 820 that is based on a neural network model, instead of performing a process of converting a resolution or scale of the input image 810. The input image 810 may include, for example, a color image or an infrared image, and may be a single image. The generation model 820 corresponds to, for example, a single neural network model, and outputs the first depth residual image 830 and the first low-resolution depth image 840 based on the input image 810 through different output layers. A function of the generation model 820 is implemented through a process of training the generation model 820. The first depth residual image 830 and the first low-resolution depth image 840 may respectively correspond to the first depth residual image 430 and the first low-resolution depth image 440 of FIG. 4.

Similarly to the process of FIG. 4, the depth image generation apparatus upscales the first low-resolution depth image 840 to generate an upscaled first low-resolution depth image 850, and combines the first depth residual image 830 and the upscaled first low-resolution depth image 850 in operation 860, to generate a target depth image 870 corresponding to the input image 810. Operation 860 corresponds to, for example, a weighted sum or summation of depth values of pixel positions corresponding to each other in the first depth residual image 830 and the upscaled first low-resolution depth image 850.

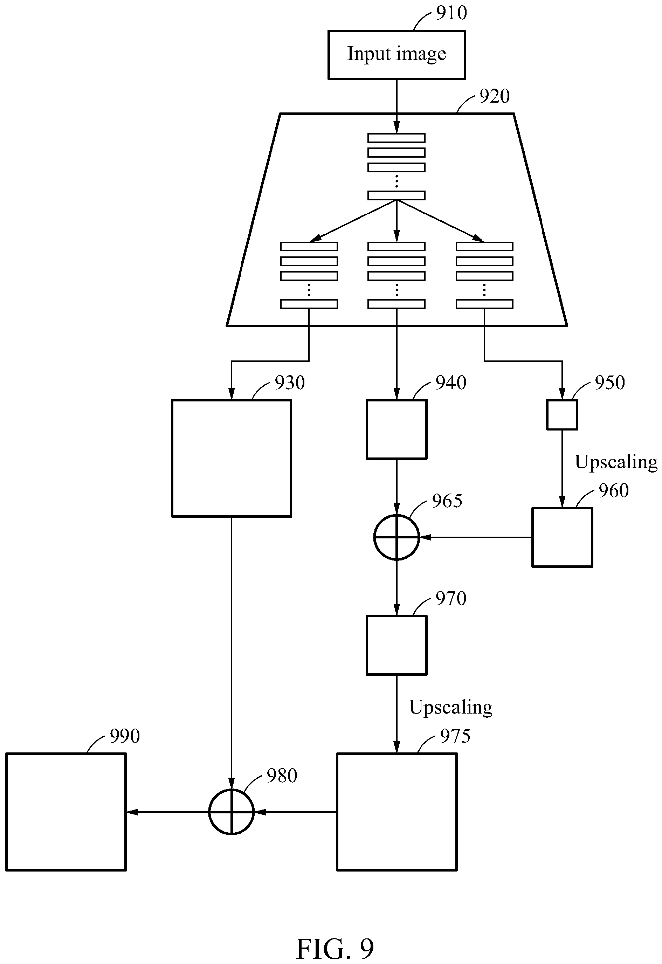

Referring to FIG. 9, a depth image generation apparatus receives an input image 910, and acquires a first depth residual image 930, a second depth residual image 940 and a second low-resolution depth image 950 using a generation model 920 that is based on a neural network model, instead of performing a process of converting a resolution or scale of the input image 910. The input image 910 may include, for example, a color image or an infrared image, and may be a single image. The generation model 920 corresponds to, for example, a single neural network model, and outputs the first depth residual image 930, the second depth residual image 940 and the second low-resolution depth image 950 based on the input image 910 through different output layers. The generation model 920 is a model trained to output the first depth residual image 930, the second depth residual image 940 and the second low-resolution depth image 950 based on input information. To implement the generation model 920, an image-to-image translation scheme using GANs may be used. The first depth residual image 930, the second depth residual image 940 and the second low-resolution depth image 950 may respectively correspond to the first depth residual image 620, the second depth residual image 640 and the second low-resolution depth image 655 of FIG. 6.

Similarly to the process of FIG. 6, the depth image generation apparatus upscales the second low-resolution depth image 950 to generate an upscaled second low-resolution depth image 960, and combines the second depth residual image 940 and the upscaled second low-resolution depth image 960 in operation 965, to generate a first low-resolution depth image 970. Operation 965 corresponds to, for example, a weighted sum or summation of depth values of pixel positions corresponding to each other in the second depth residual image 940 and the upscaled second low-resolution depth image 960.

The depth image generation apparatus upscales the first low-resolution depth image 970 to generate an upscaled first low-resolution depth image 975, and combines the first depth residual image 930 and the upscaled first low-resolution depth image 975 in operation 980, to generate a target depth image 990 corresponding to the input image 910. Operation 980 corresponds to, for example, a weighted sum or summation of depth values of pixel positions corresponding to each other in the first depth residual image 930 and the upscaled first low-resolution depth image 975.

The multi-scale-based depth estimation structure used to generate a depth image may four or more layers, as well as two layers as described in the example of FIG. 8 and three layers as described in the example of FIG. 9.

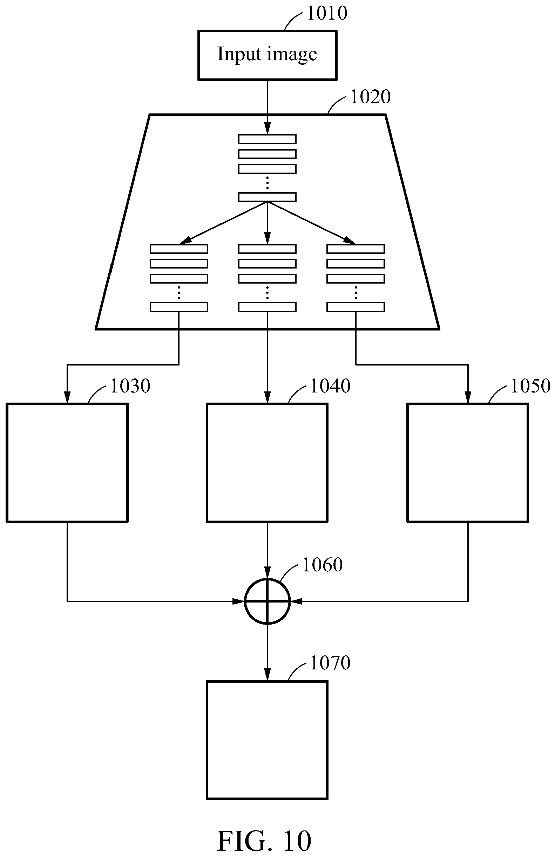

Referring to FIG. 10, a depth image generation apparatus receives an input image 1010, and acquires intermediate depth images 1030, 1040 and 1050 using a generation model 1020 that is based on a neural network model that uses the input image 1010 as an input. For example, the intermediate depth images 1030, 1040 and 1050 may have the same size, but include depth information of different degrees of precision. The generation model 1020 outputs the intermediate depth images 1030, 1040 and 1050 including the depth information of the different degrees of precision through different output layers based on the input image 1010. The generation model 1020 is a single neural network model trained to output the intermediate depth images 1030, 1040 and 1050 based on input information. For example, the intermediate depth image 1030 includes depth information with a relatively high degree of precision, the intermediate depth image 1050 includes depth information with a relatively low degree of precision, and the intermediate depth image 1040 includes depth information with an intermediate degree of precision. The intermediate depth image 1030 includes, for example, local depth information or depth information of a high frequency, and the intermediate depth image 1040 includes, for example, depth information of an intermediate frequency. The intermediate depth image 1050 includes, for example, global depth information or depth information of a low frequency.

The depth image generation apparatus combines the intermediate depth images 1030, 1040 and 1050 in operation 1060, to generate a target depth image 1070 corresponding to the input image 1010. Operation 1060 corresponds to, for example, a weighted sum or summation of depth values of pixel positions corresponding to each other in the intermediate depth images 1030, 1040 and 1050. Through the above process, the depth image generation apparatus generates a depth image with a high quality based on a color image or an infrared image.

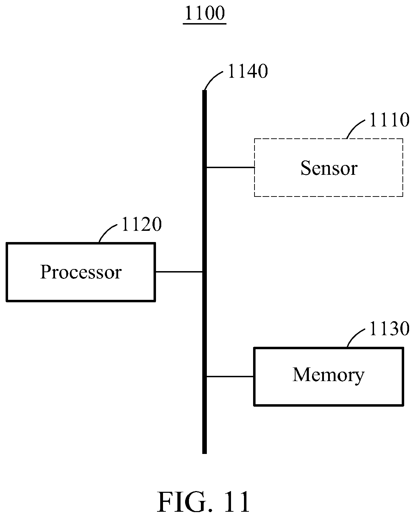

FIG. 11 illustrates an example of a configuration of a depth image generation apparatus 1100.

Referring to FIG. 11, the depth image generation apparatus 1100 includes, for example, a sensor 1110, a processor 1120 and a memory 1130. The sensor 1110, the processor 1120 and the memory 1130 communicate with each other via a communication bus 1140. In an example, the sensor 1110 may be located outside the depth image generation apparatus.

The sensor 1110 may include any one or any combination of an image sensor configured to acquire a color image, an infrared sensor configured to acquire an infrared image, and a depth sensor configured to acquire a depth image. For example, the sensor 1110 acquires an input image including either one or both of a color image and an infrared image. The sensor 1110 transfers the acquired input image to either one or both of the processor 1120 and the memory 1130.

The processor 1120 controls the depth image generation apparatus and processes at least one operation associated with the above-described depth image generation method. In an example, the processor 1120 receives an input image including either one or both of a color image and an infrared image, and generates a first low-resolution image having a resolution lower than a resolution of the input image. The processor 1120 downsamples the input image to generate the first low-resolution image. The processor 1120 acquires a first depth residual image corresponding to the input image using a first generation model that is based on a first neural network, and generates a first low-resolution depth image corresponding to the first low-resolution image using a second generation model that is based on a second neural network. The processor 1120 generates a target depth image corresponding to the input image based on the first depth residual image and the first low-resolution depth image. The first depth residual image includes, for example, depth information of a high-frequency component in comparison to the first low-resolution depth image. The processor 1120 upsamples the first low-resolution depth image to a resolution of the input image, and combines depth information of the upsampled first low-resolution depth image and depth information of the first depth residual image to generate the target depth image.

In an example, to generate the target depth image in a multi-scale structure with three layers in the processor 1120, the processor 1120 may use a third generation model that is based on a third neural network, in addition to the first generation model and the second generation model. In this example, the processor 1120 acquires a second depth residual image corresponding to the first low-resolution image using the second generation model. The processor 1120 generates a second low-resolution image having a resolution lower than that of the first low-resolution image, and acquires a second low-resolution depth image corresponding to the second low-resolution image using the third generation model. The processor 1120 upsamples the second low-resolution depth image to a resolution of the second depth residual image, and combines depth information of the upsampled second low-resolution depth image and depth information of the second depth residual image to generate a first low-resolution depth image. The second depth residual image includes depth information of a high-frequency component in comparison to the second low-resolution depth image. The processor 1120 combines the generated first low-resolution depth image and the first depth residual image to generate the target depth image.

In another example, the processor 1120 performs a process of generating a depth image with a high quality by calibrating an input depth image acquired by a depth sensor based on a color image or an infrared image. This example has been described above with reference to FIG. 2.

In still another example, the processor 1120 receives an input image, and acquires a first depth residual image and a first low-resolution depth image using a generation model that is based on a neural network that uses the input image as an input. The processor 1120 generates a target depth image corresponding to the input image based on the first depth residual image and the first low-resolution depth image. To acquire the first low-resolution depth image, the processor 1120 acquires a second depth residual image and a second low-resolution depth image using the generation model, and generates the first low-resolution depth image based on the second depth residual image and the second low-resolution depth image. This example has been described above with reference to FIGS. 8 and 9.

In still another example, the processor 1120 receives an input image, and acquires intermediate depth images with the same size using a generation model that is based on a neural network that uses the input image as an input. The intermediate depth images include depth information of different degrees of precision. The processor 1120 combines the acquired intermediate depth images to generate a target depth image. This example has been described above with reference to FIG. 10.

Also, the processor 1120 may perform at least one of the operations described above with reference to FIGS. 1 through 10, and further description thereof is not repeated herein.

The memory 1130 stores information used in the above-described process of generating a depth image and result information. Also, the memory 1130 stores instructions readable in a computer. When instructions stored in the memory 1130 are executed by the processor 1120, the processor 1120 processes at least one of the above-described operations.

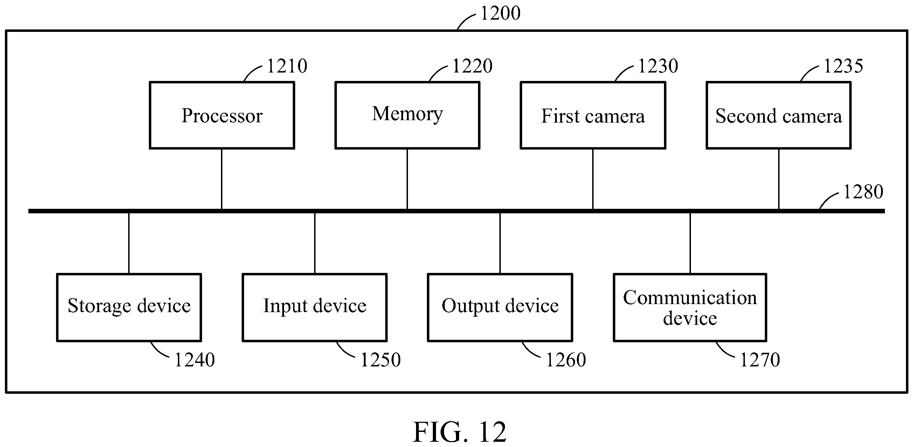

FIG. 12 illustrates an example of a configuration of a computing apparatus 1200.

The computing apparatus 1200 is an apparatus configured to perform a function of generating a depth image, and performs operations of the depth image generation apparatus of FIG. 11. Referring to FIG. 12, the computing apparatus 1200 includes, for example, a processor 1210, a memory 1220, a first camera 1230, a second camera 1235, a storage device 1240, an input device 1250, an output device 1260, a communication device 1270 and a communication bus 1280. Each of components in the computing apparatus 1200 exchanges data and/or information with another component via the communication bus 1280.

The processor 1210 performs functions and execute instructions in the computing apparatus 1200. For example, the processor 1210 may process instructions stored in the memory 1220 or the storage device 1240. The processor 1210 performs at least one of the operations described above with reference to FIGS. 1 through 11.

The memory 1220 stores data and/or information. The memory 1220 includes a non-transitory computer-readable storage medium or a computer-readable storage device. The memory 1220 may include, for example, a random access memory (RAM), a dynamic RAM (DRAM), a static RAM (SRAM), or other types of non-volatile memories known in the art. The memory 1220 stores instructions to be executed by the processor 1210, and information associated with execution of software or an application while the software or the application is being executed by the computing apparatus 1200.

The first camera 1230 may acquire either one or both of a still image and a video image as a color image. The first camera 1230 corresponds to, for example, an image sensor described herein. The second camera 1235 may acquire an infrared image. The second camera 1235 may capture an infrared ray emitted from an object or an infrared ray reflected from an object. The second camera 1235 corresponds to, for example, an infrared sensor described in the herein. In an example, the computing apparatus 1200 may include either one or both of the first camera 1230 and the second camera 1235. In another example, the computing apparatus 1200 may further include a third camera (not shown) configured to acquire a depth image. In this example, the third camera may correspond to a depth sensor described herein.

The storage device 1240 includes a non-transitory computer-readable storage medium or a computer-readable storage device. The storage device 1240may store a larger amount of information that that of the memory 1220 and may store information for a relatively long period of time. The storage device 1240 may include, for example, a magnetic hard disk, an optical disk, a flash memory, an electrically erasable programmable read-only memory (EEPROM), or other types of non-volatile memories known in the art.

The input device 1250 receives an input from a user through a tactile input, a video input, an audio input, or a touch input. For example, the input device 1250 may detect an input from a keyboard, a mouse, a touchscreen, a microphone, or the user, and may include other devices configured to transfer the detected input to the computing apparatus 1200.

The output device 1260 provides a user with an output of the computing apparatus 1200 using a visual scheme, an auditory scheme, or a tactile scheme. For example, the output device 1260 may include, for example, a liquid crystal display (LCD), a light emitting diode (LED) display, a touchscreen, a speaker, a vibration generator, or other devices configured to provide the user with the output.

The communication device 1270 communicates with an external device via a wired or wireless network. For example, the communication device 1270 may communicate with the external device using a wired communication scheme, or a wireless communication scheme, for example, a Bluetooth communication, a wireless fidelity (Wi-Fi) communication, a third generation (3G) communication or a long term evolution (LTE) communication.

The first generation models 420, 515, 615, and 715, the second generation models 450, 535, 630, and 730, the third generation models 650 and 750, the processors 1120 and 1210, the memories 1130 and 1220, the communication buses 1140 and 1280, the storage device 1240, the input device 1250, the output device 1260, the communication device 1270, the processors, the memories, and other components and devices in FIGS. 1 to 12 that perform the operations described in this application are implemented by hardware components configured to perform the operations described in this application that are performed by the hardware components. Examples of hardware components that may be used to perform the operations described in this application where appropriate include controllers, sensors, generators, drivers, memories, comparators, arithmetic logic units, adders, subtractors, multipliers, dividers, integrators, and any other electronic components configured to perform the operations described in this application. In other examples, one or more of the hardware components that perform the operations described in this application are implemented by computing hardware, for example, by one or more processors or computers. A processor or computer may be implemented by one or more processing elements, such as an array of logic gates, a controller and an arithmetic logic unit, a digital signal processor, a microcomputer, a programmable logic controller, a field-programmable gate array, a programmable logic array, a microprocessor, or any other device or combination of devices that is configured to respond to and execute instructions in a defined manner to achieve a desired result. In one example, a processor or computer includes, or is connected to, one or more memories storing instructions or software that are executed by the processor or computer. Hardware components implemented by a processor or computer may execute instructions or software, such as an operating system (OS) and one or more software applications that run on the OS, to perform the operations described in this application. The hardware components may also access, manipulate, process, create, and store data in response to execution of the instructions or software. For simplicity, the singular term "processor" or "computer" may be used in the description of the examples described in this application, but in other examples multiple processors or computers may be used, or a processor or computer may include multiple processing elements, or multiple types of processing elements, or both. For example, a single hardware component or two or more hardware components may be implemented by a single processor, or two or more processors, or a processor and a controller. One or more hardware components may be implemented by one or more processors, or a processor and a controller, and one or more other hardware components may be implemented by one or more other processors, or another processor and another controller. One or more processors, or a processor and a controller, may implement a single hardware component, or two or more hardware components. A hardware component may have any one or more of different processing configurations, examples of which include a single processor, independent processors, parallel processors, single-instruction single-data (SISD) multiprocessing, single-instruction multiple-data (SIMD) multiprocessing, multiple-instruction single-data (MISD) multiprocessing, and multiple-instruction multiple-data (MIMD) multiprocessing.

The methods illustrated in FIGS. 1 to 12 that perform the operations described in this application are performed by computing hardware, for example, by one or more processors or computers, implemented as described above executing instructions or software to perform the operations described in this application that are performed by the methods. For example, a single operation or two or more operations may be performed by a single processor, or two or more processors, or a processor and a controller. One or more operations may be performed by one or more processors, or a processor and a controller, and one or more other operations may be performed by one or more other processors, or another processor and another controller. One or more processors, or a processor and a controller, may perform a single operation, or two or more operations.

Instructions or software to control computing hardware, for example, one or more processors or computers, to implement the hardware components and perform the methods as described above may be written as computer programs, code segments, instructions or any combination thereof, for individually or collectively instructing or configuring the one or more processors or computers to operate as a machine or special-purpose computer to perform the operations that are performed by the hardware components and the methods as described above. In one example, the instructions or software include machine code that is directly executed by the one or more processors or computers, such as machine code produced by a compiler. In another example, the instructions or software includes higher-level code that is executed by the one or more processors or computer using an interpreter. The instructions or software may be written using any programming language based on the block diagrams and the flow charts illustrated in the drawings and the corresponding descriptions in the specification, which disclose algorithms for performing the operations that are performed by the hardware components and the methods as described above.

The instructions or software to control computing hardware, for example, one or more processors or computers, to implement the hardware components and perform the methods as described above, and any associated data, data files, and data structures, may be recorded, stored, or fixed in or on one or more non-transitory computer-readable storage media. Examples of a non-transitory computer-readable storage medium include read-only memory (ROM), random-access memory (RAM), flash memory, CD-ROMs, CD-Rs, CD+Rs, CD-RWs, CD+RWs, DVD-ROMs, DVD-Rs, DVD+Rs, DVD-RWs, DVD+RWs, DVD-RAMs, BD-ROMs, BD-Rs, BD-R LTHs, BD-REs, magnetic tapes, floppy disks, magneto-optical data storage devices, optical data storage devices, hard disks, solid-state disks, and any other device that is configured to store the instructions or software and any associated data, data files, and data structures in a non-transitory manner and provide the instructions or software and any associated data, data files, and data structures to one or more processors or computers so that the one or more processors or computers can execute the instructions. In one example, the instructions or software and any associated data, data files, and data structures are distributed over network-coupled computer systems so that the instructions and software and any associated data, data files, and data structures are stored, accessed, and executed in a distributed fashion by the one or more processors or computers.

While this disclosure includes specific examples, it will be apparent after an understanding of the disclosure of this application that various changes in form and details may be made in these examples without departing from the scope of the claims. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components. Therefore, the scope of the disclosure is defined not by the detailed description, but by the claims, and all variations within the scope of the claims are to be construed as being included in the disclosure.

## Claims

1. A method for depth image generation, comprising:
receiving (210) an input image (410) comprising a color image or an infrared image;
generating (230) a first low-resolution image (440, 625) having a resolution lower than a resolution of the input image (410);
acquiring (220) a first depth residual image (430), corresponding to the input image (410), the depth residual image including depth information of a high-frequency component of the input image (410), by using a first generation model (420) based on a first neural network that uses the input image (410) as an input;
generating (240) a first low-resolution depth image (460, 670) corresponding to the first low-resolution image (440) by using a second generation model (450, 630) based on a second neural network that uses the first low-resolution image (440) as an input; and
generating (250) a target depth image (490) corresponding to the input image (410), based on the first depth residual image (430) and the first low-resolution depth image (460).

2. The method of claim 1, wherein the generating of the target depth image (490) comprises upsampling the first low-resolution depth image (460) to a resolution of the input image (410); and
generating the target depth image (490) by combining depth information of the upsampled first low-resolution depth image (470) and depth information of the first depth residual image (430), and/or
wherein the first low-resolution depth image (460) comprises depth information of a low-frequency component in comparison to the first depth residual image (430).

3. The method of claim 1 or 2, wherein the generating of the first low-resolution depth image (670) comprises:
acquiring (310) a second depth residual image (640) corresponding to the first low-resolution image (625) using the second generation model (630),;
generating (320) a second low-resolution image (645) having a resolution lower than the resolution of the first low-resolution image (625), wherein preferably the generating of the second low-resolution image (645) comprises downsampling the first low-resolution image (625) to generate the second low-resolution image (645);
acquiring (330) a second low-resolution depth image (655) corresponding to the second low-resolution image (645) using a third neural network-based third generation model (650), wherein preferably a resolution of the second low-resolution depth image (655) is lower than a resolution of the first low-resolution depth image (640) and wherein preferably the second depth residual image (640) comprises depth information of a high-frequency component in comparison to the second low-resolution depth image (655); and
generating (340) the first low-resolution depth image (670) based on the second depth residual image (640) and the second low-resolution depth image (655), wherein preferably the generating of the first low-resolution depth image (670) comprises upsampling the second low-resolution depth image (655) to a resolution of the second depth residual image (640); and generating the first low-resolution depth image (670) by combining depth information of the upsampled second low-resolution depth image (660) and depth information of the second depth residual image (640).

4. The method of claim 1, 2 or 3, wherein the input image comprises one of a color image or an infrared image; and wherein preferably:
the input image further comprises an input depth image;
the method includes generating a first low-resolution input depth image having a resolution lower than a resolution of the input depth image;
in the acquiring of the first depth residual image, the first generation model uses a pixel value of the color image or infrared image, respectively, and a pixel value of the input depth image as inputs, and outputs a pixel value of the first depth residual image; and
in the generating of the first low-resolution depth image, the second generation model uses a pixel value of the first low-resolution image and a pixel value of the first low-resolution input depth image as inputs, and outputs a pixel value of the first low-resolution depth image .

5. A method for depth image generation, the method comprising:
receiving an input image (810, 910) comprising a color image or an infrared image;
acquiring a first depth residual image (830, 930), the depth residual image including depth information of a high-frequency component of the input image and a first low-resolution depth image (840, 970) by using a generation model (820, 920) that is based on a single neural network that uses the input image (810) as an input; and
generating (860) a target depth image (870) corresponding to the input image (810), based on the first depth residual image (830) and the first low-resolution depth image (840).

6. The method of claim 5, wherein the acquiring of the first depth residual image (930) and the first low-resolution depth image (970) comprises acquiring a second depth residual image (940) and a second low-resolution depth image (950) using the generation model (920), and generating (860) the first low-resolution depth image (970) based on the second depth residual image (940) and the second low-resolution depth image (950), and
wherein the generation model (920) uses the input image (910) as an input and outputs the first depth residual image (930), the second depth residual image (940), and the second low-resolution depth image (950).

7. A method for depth image generation, the method comprising:
receiving an input image (1010) comprising a color image or an infrared image;
acquiring intermediate depth images (1030, 1040, 1050) having the same size as each other using a generation model (1020) that is based on a neural network that uses the input image (1010) as an input; and
generating (1060) a target depth image (1070) by combining the acquired intermediate depth images,
wherein the intermediate depth images (1030, 1040, 1050) comprise depth information of different frequencies.

8. A non-transitory computer-readable storage medium storing instructions that, when executed by a processor, cause the processor to perform the method of any of the claims 1-7.

9. An apparatus for depth image generation, comprising:
a processor configured to:
receive an input image (410) comprising a color image or an infrared image;
generate a first low-resolution image (440, 625) having a resolution lower than a resolution of the input image;
acquire a first depth residual image (430) corresponding to the input image, the depth residual image including depth information of a high-frequency component of the input image (410), by using a first generation model (420) based on a first neural network that uses the input image as an input;
generate a first low-resolution depth image (460, 670) corresponding to the first low-resolution image, by using a second generation model (450, 630) based on a second neural network that uses the first low-resolution image as an input; and
generate (480) a target depth image (490) corresponding to the input image, based on the first depth residual image and the first low-resolution depth image.

10. The apparatus of claim 9, wherein the processor is further configured to:
upsample the first low-resolution depth image (460) to a resolution of the input image (410); and
generate the target depth image (490) by combining depth information of the upsampled first low-resolution depth image (470) and depth information of the first depth residual image (430), preferably comprising calculating a weighted sum or a summation of depth values of pixel positions corresponding to each other in the first depth residual image (430) and the upsampled first low-resolution depth image (470).

11. The apparatus of claim 9 or 10, wherein the processor is further configured to:
acquire a second depth residual image (640) corresponding to the first low-resolution image (625) using the second generation model (630);
generate a second low-resolution image (645) having a resolution lower than a resolution of the first low-resolution image (625);
acquire a second low-resolution depth image (655) corresponding to the second low-resolution image (645) using a third neural network-based third generation model (650); and
generate the first low-resolution depth image (670) based on the second depth residual image (640) and the second low-resolution depth image (655), wherein preferably a resolution of the first low-resolution depth image (670) is higher than a resolution of the second low-resolution depth image (655), and wherein the second depth residual image (640) comprises depth information of a high-frequency component in comparison to the second low-resolution depth image (655), and for which the processor is preferably further configured to:
upsample the second low-resolution depth image (655) to a resolution of the second depth residual image (640); and
generate the first low-resolution depth image (670) by combining depth information of the upsampled second low-resolution depth image (660) and depth information of the second depth residual image (640), preferably comprising calculating a weighted sum or a summation of depth values of pixel positions corresponding to each other in the second depth residual image (640) and the upsampled second low-resolution depth image(660).

12. The apparatus of claim 9, 10 or 11, further comprising:
a sensor configured to acquire the input image, wherein the input image comprises either one or both of a color image or an infrared image, and wherein preferably:
the input image further comprises an input depth image; and
the apparatus generates a first low-resolution input depth image having a resolution lower than a resolution of the input depth image; and
in the acquiring of the first depth residual image, the first generation model uses a pixel value of the color image or infrared image, respectively, and a pixel value of the input depth image as inputs, and outputs a pixel value of the first depth residual image; and
in the generating of the first low-resolution depth image, the second generation model uses a pixel value of the first low-resolution image and a pixel value of the first low-resolution input depth image as inputs, and outputs a pixel value of the first low-resolution depth image.

13. An apparatus for depth image generation, comprising:
a processor configured to:
receive an input image (810, 910) comprising a color image or an infrared image;
acquire a first depth residual image (830, 930), the depth residual image including depth information of a high-frequency component of the input image and a first low-resolution depth image (840, 970) by using a generation model (820, 920) that is based on a single neural network that uses the input image (810) as an input; and
generate (860) a target depth image (870) corresponding to the input image (810), based on the first depth residual image (830) and the first low-resolution depth image(840).

14. The apparatus of claim 13, wherein the processor is further configured to:
acquire a second depth residual image (940) and a second low-resolution depth image (950) using the generation model; and
generate the first low-resolution depth image (970) based on the second depth residual image (940) and the second low-resolution depth image (950),
wherein the generation model (920) uses the input image (910) as an input and outputs the first depth residual image (930), the second depth residual image (940), and the second low-resolution depth image (950);
wherein preferably the first low-resolution depth image (940) has a resolution lower than a resolution of the input image (910), and the second low-resolution depth image (950) has a resolution lower than the resolution of the first low-resolution depth image (940).

15. An apparatus for depth image generation, comprising:
a processor configured to:
receive an input image (1010) comprising a color image or an infrared image;
acquire intermediate depth images (1030, 1040, 1050) having the same size as each other by using a generation model (1020) that is based on a neural network that uses the input image (1010) as an input; and
generate a target depth image (1070) by combining the acquired intermediate depth images (1030, 1040, 1050), preferably comprising calculating a weighted sum or summation of depth values of pixel positions corresponding to each other in the acquired intermediate depth images (1030, 1040, 1050);
wherein the acquired intermediate depth images (1030, 1040, 1050) comprise depth information of different frequencies.

## Patentansprüche

1. Verfahren zur Tiefenbilderzeugung, mit den folgenden Schritten:
Empfangen (210) eines Eingabebildes (410), das ein Farbbild oder ein Infrarotbild umfasst;
Erzeugen (230) eines ersten Bildes mit niedriger Auflösung (440, 625), dessen Auflösung niedriger ist als die Auflösung des Eingabebildes (410);
Erfassen (220) eines ersten, dem Eingabebild (410) entsprechenden Tiefenrestbildes (430), wobei das Tiefenrestbild (430) Tiefeninformationen einer Hochfrequenzkomponente des Eingabebildes (410) enthält, unter Verwendung eines ersten Erzeugungsmodells (420), das auf einem ersten neuronalen Netzwerk basiert, das das Eingabebild (410) als Eingabe verwendet;
Erzeugen (240) eines ersten, dem ersten Bild mit niedriger Auflösung (440) entsprechenden Tiefenbildes mit niedriger Auflösung (460, 670) unter Verwendung eines zweiten Erzeugungsmodells (450, 630), das auf einem zweiten neuronalen Netzwerk basiert, das das erste Bild mit niedriger Auflösung (440) als Eingabe verwendet; und
Erzeugen (250) eines dem Eingabebild (410) entsprechenden Zieltiefenbildes (490) basierend auf dem ersten Tiefenrestbild (430) und dem ersten Tiefenbild mit niedriger Auflösung (460).

2. Verfahren nach Anspruch 1, wobei das Erzeugen des Zieltiefenbildes (490) das Upsampeln des ersten Tiefenbildes mit niedriger Auflösung (460) zu einer Auflösung des Eingabebildes (410) und das Erzeugen des Zieltiefenbildes (490) durch Kombinieren von Tiefeninformationen des durch Upsampeln umgesetzten ersten Tiefenbildes mit niedriger Auflösung (470) und Tiefeninformationen des ersten Tiefenrestbildes (430) umfasst, und/oder
wobei das erste Tiefenbild mit niedriger Auflösung (460) Tiefeninformationen einer Niederfrequenzkomponente im Vergleich zum ersten Tiefenrestbild (430) umfasst.

3. Verfahren nach Anspruch 1 oder 2, wobei das Erzeugen des ersten Tiefenbildes mit niedriger Auflösung (670) Folgendes umfasst:
Erfassen (310) eines zweiten, dem ersten Bild mit niedriger Auflösung (625) entsprechenden Tiefenrestbildes (640) unter Verwendung des zweiten Erzeugungsmodells (630);
Erzeugen (320) eines zweiten Bildes mit niedriger Auflösung (645), dessen Auflösung niedriger ist als die Auflösung des ersten Bildes mit niedriger Auflösung (625), wobei das Erzeugen des zweiten Bildes mit niedriger Auflösung (645) vorzugsweise ein Downsampeln des ersten Bildes mit niedriger Auflösung (625) umfasst, um das zweite Bild mit niedriger Auflösung (645) zu erzeugen;
Erfassen (330) eines zweiten, dem zweiten Bild (645) mit niedriger Auflösung entsprechenden Tiefenbildes mit niedriger Auflösung (655) unter Verwendung eines dritten, auf einem dritten neuronalen Netzwerk basierenden Erzeugungsmodells (650), wobei vorzugsweise eine Auflösung des zweiten Tiefenbildes mit niedriger Auflösung (655) niedriger ist als die Auflösung des ersten Tiefenbildes mit niedriger Auflösung (670) und wobei vorzugsweise das zweite Tiefenrestbild (640) Tiefeninformationen einer Hochfrequenzkomponente im Vergleich zum zweiten Tiefenbild mit niedriger Auflösung (655) umfasst; und
Erzeugen (340) des ersten Tiefenbildes mit niedriger Auflösung (670) basierend auf dem zweiten Tiefenrestbild (640) und dem zweiten Tiefenbild mit niedriger Auflösung (655), wobei vorzugsweise das Erzeugen des ersten Tiefenbildes mit niedriger Auflösung (670) Folgendes umfasst: das Upsampeln des zweiten Tiefenbildes mit niedriger Auflösung (655) auf eine Auflösung des zweiten Tiefenrestbildes (640) und das Erzeugen des ersten Tiefenbildes mit niedriger Auflösung (670) durch Kombinieren von Tiefeninformationen des durch Upsampeln umgesetzten zweiten Tiefenbildes mit niedriger Auflösung (660) und Tiefeninformationen des zweiten Tiefenrestbildes (640).

4. Verfahren nach Anspruch 1, 2 oder 3, wobei das Eingabebild ein Farbbild oder ein Infrarotbild umfasst; und wobei vorzugsweise:
das Eingabebild ferner ein Eingabetiefenbild umfasst;
das Verfahren das Erzeugen eines ersten Eingabetiefenbildes mit niedriger Auflösung umfasst, dessen Auflösung niedriger ist als die Auflösung des Eingabetiefenbildes;
beim Erfassen des ersten Tiefenrestbildes das erste Erzeugungsmodell einen Pixelwert des Farbbildes bzw. Infrarotbildes und einen Pixelwert des Eingabetiefenbildes als Eingaben verwendet und einen Pixelwert des ersten Tiefenrestbildes ausgibt; und
beim Erzeugen des ersten Tiefenbildes mit niedriger Auflösung das zweite Erzeugungsmodell einen Pixelwert des ersten Bildes mit niedriger Auflösung und einen Pixelwert des ersten Eingabetiefenbildes mit niedriger Auflösung als Eingaben verwendet und einen Pixelwert des ersten Tiefenbildes mit niedriger Auflösung ausgibt.

5. Verfahren zur Tiefenbilderzeugung, wobei das Verfahren die folgenden Schritte umfasst:
Empfangen eines Eingabebildes (810, 910), das ein Farbbild oder ein Infrarotbild umfasst;
Erfassen eines ersten Tiefenrestbildes (830, 930), wobei das Tiefenrestbild Tiefeninformationen einer Hochfrequenzkomponente des Eingabebildes enthält, und eines ersten Tiefenbildes mit niedriger Auflösung (840, 970) unter Verwendung eines Erzeugungsmodells (820, 920), das auf einem einzelnen neuronalen Netzwerk basiert, das das Eingabebild (810) als Eingabe verwendet; und
Erzeugen (860) eines dem Eingabebild (810) entsprechenden Zieltiefenbildes (870) basierend auf dem ersten Tiefenrestbild (830) und dem ersten Tiefenbild mit niedriger Auflösung (840).

6. Verfahren nach Anspruch 5, wobei das Erfassen des ersten Tiefenrestbildes (930) und des ersten Tiefenbildes mit niedriger Auflösung (970) Folgendes umfasst: das Erfassen eines zweiten Tiefenrestbildes (940) und eines zweiten Tiefenbildes mit niedriger Auflösung (950) unter Verwendung des Erzeugungsmodells (920) und das Erzeugen (860) des ersten Tiefenbildes mit niedriger Auflösung (970) basierend auf dem zweiten Tiefenrestbild (940) und dem zweiten Tiefenbild mit niedriger Auflösung (950), und
wobei das Erzeugungsmodell (920) das Eingabebild (910) als Eingabe verwendet und das erste Tiefenrestbild (930), das zweite Tiefenrestbild (940) und das zweite Tiefenbild mit niedriger Auflösung (950) ausgibt.

7. Verfahren zur Tiefenbilderzeugung, wobei das Verfahren die folgenden Schritte umfasst:
Empfangen eines Eingabebildes (1010), das ein Farbbild oder ein Infrarotbild umfasst;
Erfassen von Zwischentiefenbildern (1030, 1040, 1050) mit jeweils gleicher Größe unter Verwendung eines Erzeugungsmodells (1020), das auf einem neuronalen Netzwerk basiert, das das Eingabebild (1010) als Eingabe verwendet; und
Erzeugen (1060) eines Zieltiefenbildes (1070) durch Kombinieren der erfassten Zwischentiefenbilder,
wobei die Zwischentiefenbilder (1030, 1040, 1050) Tiefeninformationen unterschiedlicher Frequenzen umfassen.

8. Nichtflüchtiges computerlesbares Speichermedium, das Anweisungen speichert, die, wenn sie von einem Prozessor ausgeführt werden, den Prozessor veranlassen, das Verfahren nach einem der Ansprüche 1 bis 7 durchzuführen.

9. Vorrichtung zur Tiefenbilderzeugung, mit:
einem Prozessor, der konfiguriert ist zum:
Empfangen eines Eingabebildes (410), das ein Farbbild oder ein Infrarotbild umfasst;
Erzeugen eines ersten Bildes mit niedriger Auflösung (440, 625), dessen Auflösung niedriger ist als die Auflösung des Eingabebildes;
Erfassen eines ersten, dem Eingabebild entsprechenden Tiefenrestbildes (430), wobei das Tiefenrestbild Tiefeninformationen einer Hochfrequenzkomponente des Eingabebildes (410) enthält, unter Verwendung eines ersten Erzeugungsmodells (420), das auf einem ersten neuronalen Netzwerk basiert, das das Eingabebild als Eingabe verwendet;
Erzeugen eines ersten, dem ersten Bild mit niedriger Auflösung entsprechenden Tiefenbildes mit niedriger Auflösung (460, 670) unter Verwendung eines zweiten Erzeugungsmodells (450, 630), das auf einem zweiten neuronalen Netzwerk basiert, das das erste Bild mit niedriger Auflösung als Eingabe verwendet; und
Erzeugen (480) eines dem Eingabebild entsprechenden Zieltiefenbildes (490) basierend auf dem ersten Tiefenrestbild und dem ersten Tiefenbild mit niedriger Auflösung.

10. Vorrichtung nach Anspruch 9, wobei der Prozessor ferner konfiguriert ist zum:
Upsampeln des ersten Tiefenbildes mit niedriger Auflösung (460) zu einer Auflösung des Eingabebildes (410); und
Erzeugen des Zieltiefenbildes (490) durch Kombinieren von Tiefeninformationen des durch Upsampeln umgesetzten ersten Tiefenbildes mit niedriger Auflösung (470) und Tiefeninformationen des ersten Tiefenrestbildes (430), was vorzugsweise das Berechnen einer gewichteten Summe oder einer Summierung von Tiefenwerten von einander entsprechenden Pixelpositionen im ersten Tiefenrestbild (430) und im durch Upsampeln umgesetzten ersten Tiefenbild mit niedriger Auflösung (470) umfasst.

11. Vorrichtung nach Anspruch 9 oder 10, wobei der Prozessor ferner konfiguriert ist zum:
Erfassen eines zweiten, dem ersten Bild mit niedriger Auflösung (625) entsprechenden Tiefenrestbildes (640) unter Verwendung des zweiten Erzeugungsmodells (630);
Erzeugen eines zweiten Bildes mit niedriger Auflösung (645), dessen Auflösung niedriger ist als die Auflösung des ersten Bildes mit niedriger Auflösung (625);
Erfassen eines zweiten, dem zweiten Bild (645) mit niedriger Auflösung entsprechenden Tiefenbildes mit niedriger Auflösung (655) unter Verwendung eines dritten, auf einem dritten neuronalen Netzwerk basierenden Erzeugungsmodells (650); und
Erzeugen des ersten Tiefenbildes mit niedriger Auflösung (670) basierend auf dem zweiten Tiefenrestbild (640) und dem zweiten Tiefenbild mit niedriger Auflösung (655), wobei vorzugsweise eine Auflösung des ersten Tiefenbildes mit niedriger Auflösung (670) höher ist als eine Auflösung des zweiten Tiefenbildes mit niedriger Auflösung (655), und wobei das zweite Tiefenrestbild (640) Tiefeninformationen einer Hochfrequenzkomponente im Vergleich zum zweiten Tiefenbild mit niedriger Auflösung (655) umfasst, und für die der Prozessor vorzugsweise ferner konfiguriert ist zum:
Upsampeln des zweiten Tiefenbildes mit niedriger Auflösung (655) auf eine Auflösung des zweiten Tiefenrestbildes (640); und
Erzeugen des ersten Tiefenbildes mit niedriger Auflösung (670) durch Kombinieren von Tiefeninformationen des durch Upsampeln umgesetzten zweiten Tiefenbildes mit niedriger Auflösung (660) und Tiefeninformationen des zweiten Tiefenrestbildes (640), was vorzugsweise das Berechnen einer gewichteten Summe oder einer Summierung von Tiefenwerten von einander entsprechenden Pixelpositionen im zweiten Tiefenrestbild (640) und im durch Upsampeln umgesetzten zweiten Tiefenbild mit niedriger Auflösung (660).

12. Vorrichtung nach Anspruch 9, 10 oder 11, ferner mit:
einem Sensor, der dazu konfiguriert ist, das Eingabebild zu erfassen, wobei das Eingabebild entweder ein Farbbild oder ein Infrarotbild oder beides umfasst und wobei vorzugsweise:
das Eingabebild ferner ein Eingabetiefenbild umfasst; und
die Vorrichtung ein erstes Eingabetiefenbild mit niedriger Auflösung erzeugt, dessen Auflösung niedriger ist als die Auflösung des Eingabetiefenbildes; und
Beim Erfassen des ersten Tiefenrestbildes das erste Erzeugungsmodell einen Pixelwert des Farbbildes bzw. Infrarotbildes und einen Pixelwert des Eingabetiefenbildes als Eingaben verwendet und einen Pixelwert des ersten Tiefenrestbildes ausgibt; und
Beim Erzeugen des ersten Tiefenbildes mit niedriger Auflösung das zweite Erzeugungsmodell einen Pixelwert des ersten Bildes mit niedriger Auflösung und einen Pixelwert des ersten Eingabetiefenbildes mit niedriger Auflösung als Eingaben verwendet und einen Pixelwert des ersten Tiefenbildes mit niedriger Auflösung ausgibt.

13. Vorrichtung zur Tiefenbilderzeugung, mit:
einem Prozessor, der konfiguriert ist zum:
Empfangen eines Eingabebildes (810, 910), das ein Farbbild oder ein Infrarotbild umfasst;
Erfassen eines ersten Tiefenrestbildes (830, 930), wobei das Tiefenrestbild Tiefeninformationen einer Hochfrequenzkomponente des Eingabebildes enthält, und eines ersten Tiefenbildes mit niedriger Auflösung (840, 970) unter Verwendung eines Erzeugungsmodells (820, 920), das auf einem einzelnen neuronalen Netzwerk basiert, das das Eingabebild (810) als Eingabe verwendet; und
Erzeugen (860) eines dem Eingabebild (810) entsprechenden Zieltiefenbildes (870) basierend auf dem ersten Tiefenrestbild (830) und dem ersten Tiefenbild mit niedriger Auflösung (840).

14. Vorrichtung nach Anspruch 13, wobei der Prozessor ferner konfiguriert ist zum:
Erfassen eines zweiten Tiefenrestbildes (940) und eines zweiten Tiefenbildes mit niedriger Auflösung (950) unter Verwendung des Erzeugungsmodells (920); und
Erzeugen des ersten Tiefenbildes mit niedriger Auflösung (970) basierend auf dem zweiten Tiefenrestbild (940) und dem zweiten Tiefenbild mit niedriger Auflösung (950), und
wobei das Erzeugungsmodell (920) das Eingabebild (910) als Eingabe verwendet und das erste Tiefenrestbild (930), das zweite Tiefenrestbild (940) und das zweite Tiefenbild (950) mit niedriger Auflösung ausgibt;
wobei vorzugsweise das erste Tiefenbild mit niedriger Auflösung (940) eine Auflösung aufweist, die niedriger ist als die Auflösung des Eingabebildes (910), und das zweite Tiefenbild mit niedriger Auflösung (950) eine Auflösung aufweist, die niedriger ist als die Auflösung des ersten Tiefenbildes mit niedriger Auflösung (940).

15. Vorrichtung zur Tiefenbilderzeugung, mit:
einem Prozessor, der konfiguriert ist zum:
Empfangen eines Eingabebildes (1010), das ein Farbbild oder ein Infrarotbild umfasst;
Erfassen von Zwischentiefenbildern (1030, 1040, 1050) mit jeweils gleicher Größe unter Verwendung eines Erzeugungsmodells (1020), das auf einem neuronalen Netzwerk basiert, das das Eingabebild (1010) als Eingabe verwendet; und
Erzeugen eines Zieltiefenbildes (1070) durch Kombinieren der erfassten Zwischentiefenbilder (1030, 1040, 1050), was vorzugsweise das Berechnen einer gewichteten Summe oder einer Summierung von Tiefenwerten von einander entsprechenden Pixelpositionen in den erfassten Zwischentiefenbildern (1030, 1040, 1050) umfasst;
wobei die erfassten Zwischentiefenbilder (1030, 1040, 1050) Tiefeninformationen unterschiedlicher Frequenzen umfassen.

## Revendications

1. Procédé de génération d'images en profondeur, comprenant les étapes consistant à :
recevoir (210) une image d'entrée (410) comprenant une image en couleur ou une image infrarouge ;
générer (230) une première image à basse résolution (440, 625) dont la résolution est inférieure à la résolution de l'image d'entrée (410) ;
acquérir (220) une première image résiduelle en profondeur (430) correspondant à l'image d'entrée (410), l'image résiduelle en profondeur (430) comprenant des informations de profondeur d'une composante haute fréquence de l'image d'entrée (410), en utilisant un premier modèle de génération (420) fondé sur un premier réseau neuronal qui utilise l'image d'entrée (410) comme entrée ;
générer (240) une première image en profondeur à basse résolution (460, 670) correspondant à la première image à basse résolution (440) en utilisant un deuxième modèle de génération (450, 630) fondé sur un deuxième réseau neuronal qui utilise la première image à basse résolution (440) comme entrée ; et
générer (250) une image en profondeur cible (490) correspondant à l'image d'entrée (410), compte tenu de la première image résiduelle en profondeur (430) et de la première image en profondeur à basse résolution (460).

2. Procédé selon la revendication 1, dans lequel la génération de l'image en profondeur cible (490) comprend le suréchantillonnage de la première image en profondeur à basse résolution. (460) à la résolution de l'image d'entrée (410), et
la génération de l'image en profondeur cible (490) en combinant les informations de profondeur de la première image en profondeur à basse résolution suréchantillonnée (470) et les informations de profondeur de la première image résiduelle en profondeur (430), et/ou
dans lequel la première image en profondeur à basse résolution (460) comprend des informations de profondeur d'une composante basse fréquence en comparaison de la première image résiduelle en profondeur (430).

3. Procédé selon la revendication 1 ou 2, dans lequel la génération de la première image en profondeur à basse résolution (670) comprend les étapes consistant à :
acquérir (310) une deuxième image résiduelle en profondeur (640) correspondant à la première image à basse résolution (625) en utilisant le deuxième modèle de génération (630) ;
générer (320) une deuxième image à basse résolution (645) dont la résolution est inférieure à la résolution de la première image à basse résolution (625), ladite génération de la deuxième image à basse résolution (645) comprenant de préférence un sous-échantillonnage de la première image à basse résolution (625) pour générer la deuxième image à basse résolution (645) ;
acquérir (330) une deuxième image en profondeur à basse résolution (655) correspondant à la deuxième image à basse résolution (645) en utilisant un troisième modèle de génération (650) fondé sur un troisième réseau neuronal, la résolution de la deuxième image de profondeur à basse résolution (655) étant de préférence inférieure à la résolution de la première image en profondeur à basse résolution (670) et la deuxième image résiduelle en profondeur (640) comprenant de préférence des informations de profondeur d'une composante haute fréquence en comparaison de la deuxième image en profondeur à basse résolution (655) ; et
générer (340) la première image en profondeur à basse résolution (670) compte tenu de la deuxième image résiduelle en profondeur (640) et de la deuxième image en profondeur à basse résolution (655), la génération de la première image en profondeur à basse résolution (670) comprenant de préférence le suréchantillonnage de la deuxième image en profondeur à basse résolution (655) à la résolution de la deuxième image résiduelle en profondeur (640), et la génération de la première image en profondeur à basse résolution (670) en combinant les informations de profondeur de la deuxième image en profondeur à basse résolution suréchantillonnée (660) et les informations de profondeur de la deuxième image résiduelle en profondeur (640).

4. Procédé selon la revendication 1, 2 ou 3, dans lequel l'image d'entrée comprend une image en couleur ou une image infrarouge ; et dans lequel de préférence :
l'image d'entrée comprend en outre une image en profondeur d'entrée ;
le procédé comprend la génération d'une première image en profondeur d'entrée à basse résolution dont la résolution est inférieure à la résolution de l'image en profondeur d'entrée ;
lors de l'acquisition de la première image résiduelle en profondeur, le premier modèle de génération utilise une valeur de pixel de l'image en couleur ou de l'image infrarouge, respectivement, et une valeur de pixel de l'image en profondeur d'entrée comme entrées, et délivre en sortie une valeur de pixel de la première image résiduelle en profondeur ; et
lors de la génération de la première image en profondeur à basse résolution, le deuxième modèle de génération utilise une valeur de pixel de la première image à basse résolution et une valeur de pixel de la première image en profondeur d'entrée à basse résolution comme entrées, et délivre en sortie une valeur de pixel de la première image en profondeur à basse résolution.

5. Procédé de génération d'images en profondeur, le procédé comprenant les étapes consistant à :
recevoir une image d'entrée (810, 910) comprenant une image en couleur ou une image infrarouge ;
acquérir une première image résiduelle en profondeur (830, 930), l'image résiduelle en profondeur comprenant des informations de profondeur d'une composante haute fréquence de l'image d'entrée, et une première image en profondeur à basse résolution (840, 970), en utilisant un modèle de génération (820, 920) qui est fondé sur un réseau neuronal unique qui utilise l'image d'entrée (810) comme entrée ; et
générer (860) une image en profondeur cible (870) correspondant à l'image d'entrée (810), compte tenu de la première image résiduelle en profondeur (830) et de la première image en profondeur à basse résolution (840).

6. Procédé selon la revendication 5, dans lequel l'acquisition de la première image résiduelle en profondeur (930) et de la première image en profondeur à basse résolution (970) comprend l'acquisition d'une deuxième image résiduelle en profondeur (940) et d'une deuxième image en profondeur à basse résolution (950) en utilisant le modèle de génération (920), et la génération (860) de la première image en profondeur à basse résolution. (970) compte tenu de la deuxième image résiduelle en profondeur (940) et de la deuxième image en profondeur à basse résolution (950) ; ledit modèle de génération (920) utilisant l'image d'entrée (910) comme entrée et délivrant en sortie la première image résiduelle en profondeur (930), la deuxième image résiduelle en profondeur (940) et la deuxième image en profondeur à basse résolution (950).

7. Procédé de génération d'images en profondeur, le procédé comprenant les étapes consistant à :
recevoir une image d'entrée (1010) comprenant une image en couleur ou une image infrarouge ;
acquérir des images en profondeur intermédiaires (1030, 1040, 1050) ayant la même taille les unes que les autres en utilisant un modèle de génération (1020) qui est fondé sur un réseau neuronal qui utilise l'image d'entrée (1010) comme entrée ; et
générer (1060) une image en profondeur cible (1070) en combinant les images en profondeur intermédiaires acquises ;
lesdites images en profondeur intermédiaires (1030, 1040, 1050) comprenant des informations de profondeur de différentes fréquences.

8. Support de stockage non transitoire lisible par ordinateur sur lequel sont stockées des instructions qui, lorsqu'elles sont exécutées par un processeur, amènent le processeur à réaliser le procédé selon l'une quelconque des revendications 1 à 7.

9. Dispositif de génération d'images en profondeur, comprenant :
un processeur conçu pour :
recevoir une image d'entrée (410) comprenant une image en couleur ou une image infrarouge ;
générer une première image à basse résolution (440, 625) dont la résolution est inférieure à la résolution de l'image d'entrée ;
acquérir une première image résiduelle en profondeur (430) correspondant à l'image d'entrée, l'image résiduelle en profondeur comprenant des informations de profondeur d'une composante haute fréquence de l'image d'entrée (410), en utilisant un premier modèle de génération (420) fondé sur un premier réseau neuronal qui utilise l'image d'entrée comme entrée ;
générer une première image en profondeur à basse résolution (460, 670) correspondant à la première image à basse résolution, en utilisant un deuxième modèle de génération (450, 630) fondé sur un deuxième réseau neuronal qui utilise la première image à basse résolution comme entrée ; et
générer (480) une image en profondeur cible (490) correspondant à l'image d'entrée, compte tenu de la première image résiduelle en profondeur et de la première image en profondeur à basse résolution.

10. Dispositif selon la revendication 9, dans lequel le processeur est en outre conçu pour :
suréchantillonner la première image en profondeur à basse résolution (460) à la résolution de l'image d'entrée (410) ; et
générer l'image en profondeur cible (490) en combinant les informations de profondeur de la première image en profondeur à basse résolution suréchantillonnée (470) et les informations de profondeur de la première image résiduelle en profondeur (430), ce qui comprend de préférence le calcul d'une somme pondérée ou d'une sommation de valeurs de profondeur de positions de pixels se correspondant les unes les autres dans la première image résiduelle en profondeur (430) et la première image en profondeur à basse résolution suréchantillonnée (470).

11. Dispositif selon la revendication 9 ou 10, dans lequel le processeur est en outre conçu pour :
acquérir une deuxième image résiduelle en profondeur (640) correspondant à la première image à basse résolution (625) en utilisant le deuxième modèle de génération (630) ;
générer une deuxième image à basse résolution (645) dont la résolution est inférieure à la résolution de la première image à basse résolution (625) ;
acquérir une deuxième image en profondeur à basse résolution (655) correspondant à la deuxième image à basse résolution (645) en utilisant un troisième modèle de génération (650) fondé sur un troisième réseau neuronal ; et
générer la première image en profondeur à basse résolution (670) compte tenu de la deuxième image résiduelle en profondeur (640) et de la deuxième image en profondeur à basse résolution (655), la résolution de la première image en profondeur à basse résolution (670) étant de préférence supérieure à la résolution de la deuxième image en profondeur à basse résolution (655), et la deuxième image résiduelle en profondeur (640) comprenant des informations de profondeur d'une composante haute fréquence en comparaison de la deuxième image en profondeur à basse résolution (655), et pour lequel le processeur est de préférence en outre conçu pour :
suréchantillonner la deuxième image en profondeur à basse résolution (655) à la résolution de la deuxième image résiduelle en profondeur (640), et
générer la première image en profondeur à basse résolution (670) en combinant les informations de profondeur de la deuxième image en profondeur à basse résolution suréchantillonnée (660) et les informations de profondeur de la deuxième image résiduelle en profondeur (640), ce qui comprend de préférence le calcul d'une somme pondérée ou d'une sommation de valeurs de profondeur de positions de pixels se correspondant les unes les autres dans la deuxième image résiduelle en profondeur (640) et la deuxième image en profondeur à basse résolution suréchantillonnée (660).

12. Dispositif selon la revendication 9, 10 ou 11, comprenant en outre :
un capteur conçu pour acquérir l'image d'entrée, l'image d'entrée comprenant soit une image en couleur, soit une image infrarouge, ou les deux, et dans lequel, de préférence :
l'image d'entrée comprend en outre une image en profondeur d'entrée ; et
le dispositif génère une première image en profondeur d'entrée à basse résolution dont la résolution est inférieure à la résolution de l'image en profondeur d'entrée ; et
lors de l'acquisition de la première image résiduelle en profondeur, le premier modèle de génération utilise une valeur de pixel de l'image en couleur ou de l'image infrarouge, respectivement, et une valeur de pixel de l'image en profondeur d'entrée comme entrées, et délivre en sortie une valeur de pixel de la première image résiduelle en profondeur ; et
lors de la génération de la première image en profondeur à basse résolution, le deuxième modèle de génération utilise une valeur de pixel de la première image à basse résolution et une valeur de pixel de la première image en profondeur d'entrée à basse résolution comme entrées, et délivre en sortie une valeur de pixel de la première image en profondeur à basse résolution.

13. Dispositif de génération d'images en profondeur, comprenant :
un processeur conçu pour :
recevoir une image d'entrée (810, 910) comprenant une image en couleur ou une image infrarouge ;
acquérir une première image résiduelle en profondeur (830, 930), l'image résiduelle en profondeur comprenant des informations de profondeur d'une composante haute fréquence de l'image d'entrée, et une première image en profondeur à basse résolution (840, 970), en utilisant un modèle de génération (820, 920) qui est fondé sur un réseau neuronal unique qui utilise l'image d'entrée (810) comme entrée ; et
générer (860) une image en profondeur cible (870) correspondant à l'image d'entrée (810), compte tenu de la première image résiduelle en profondeur (830) et de la première image en profondeur à basse résolution (840).

14. Dispositif selon la revendication 13, dans lequel le processeur est en outre conçu pour :
acquérir une deuxième image résiduelle en profondeur (940) et une deuxième image en profondeur à basse résolution (950) en utilisant le modèle de génération (920) ; et
générer la première image en profondeur à basse résolution (970) compte tenu de la deuxième image résiduelle en profondeur (940) et la deuxième image en profondeur à basse résolution (950),
ledit modèle de génération (920) utilisant l'image d'entrée (910) comme entrée et délivrant en sortie la première image résiduelle en profondeur (930), la deuxième image résiduelle en profondeur (940) et la deuxième image en profondeur à basse résolution (950) ;
ladite première image en profondeur à basse résolution (940) ayant de préférence une résolution inférieure à la résolution de l'image d'entrée (910), et la deuxième image en profondeur à basse résolution (950) ayant une résolution inférieure à la résolution de la première image en profondeur à basse résolution (940).

15. Dispositif de génération d'images en profondeur, comprenant :
un processeur conçu pour :
recevoir une image d'entrée (1010) comprenant une image en couleur ou une image infrarouge ;
acquérir des images en profondeur intermédiaires (1030, 1040, 1050) ayant la même taille les unes que les autres en utilisant un modèle de génération (1020) qui est fondé sur un réseau neuronal qui utilise l'image d'entrée (1010) comme entrée ; et
générer une image en profondeur cible (1070) en combinant les images en profondeur intermédiaires (1030, 1040, 1050) acquises, ce qui comprend de préférence le calcul d'une somme pondérée ou d'une sommation de valeurs de profondeur de positions de pixels se correspondant les unes les autres dans les images en profondeur intermédiaires (1030, 1040, 1050) acquises ;
lesdites images en profondeur intermédiaires acquises (1030, 1040, 1050) comprenant des informations de profondeur de différentes fréquences.
